# EUROPEAN PATENT SPECIFICATION

(11) **EP 1 338 803 B1**
(45) Date of publication and mention of the grant of the patent: **25.05.2005**
(21) Application number: 03001835.2
(22) Date of filing: 29.01.2003
(51) Int. Cl.: F16B 13/06, F16B 13/02, F16B 13/12, F16B 13/00

(54) **Fixing plug for a screw**
Verankerungsdübel für eine Schraube
Cheville d'ancrage pour une vis

(30) Priority: 21.02.2002 FR 0202197
(43) Date of publication of application: 27.08.2003
(73) Proprietor: Black & Decker Inc., Newark Delaware 19711 (US)
(72) Inventor: Anquetin, Robert, 91690 Fontaine La Rivière (FR)
(74) Representative: Bell, Ian Stephen

(56) References cited:
- EP-A- 0 560 518
- FR-A- 1 240 036
- FR-A- 2 546 989
- FR-A- 2 704 608

## Description

The present invention relates to a fixing plug for a screw, of the type having a longitudinal axis and integrally comprising:
- two longitudinally extreme, longitudinally mutually opposed barrels each having a general tubular shape generated by revolution about the axis, namely
   - a head barrel having a predetermined regular external diameter internally defining a free coaxial passage for a threaded shank of the screw and externally carrying a longitudinally extreme transverse flange and
   - a nut barrel having a predetermined regular external diameter, at most equal and preferably substantially equal to the regular external diameter of the head barrel, and internally having coaxial tapping adapted to cooperate with said threaded shank, and
- a plurality of mutually identical bars which may be folded by plastic deformation, each have an approximate longitudinal general orientation, are distributed at regular intervals round the axis, are disposed between the head barrels and nut barrels which they mutually connect, and each comprise in succession in the longitudinal direction from the head barrel to the nut barrel:
   - a first rectilinear branch having at least approximately a mean longitudinal plane including the axis, a predetermined longitudinal dimension and an inclination to the axis so as to extend progressively away from it from a first external diameter for connection to the head barrel to a second external diameter, the first external diameter being smaller than the regular external diameter of the head barrel and the second external diameter being at least equal to and preferably greater than the regular external diameter of the head barrel,
   - a second rectilinear branch having the same longitudinal mean plane as the first branch, a predetermined longitudinal dimension of approximately the same size as the longitudinal dimension of the first branch and an inclination to the axis so as to extend progressively toward it from the second external diameter for connection to the first branch to a third external diameter smaller than the second external diameter.

A plug of this type for anchoring a screw in a blind fashion is marketed under registered trade mark "MOLLY" and described in American Patent No. 2 559 281, which relates to an embodiment in three pieces based on a metal sheet and in French Patent No. 2 546 989 which relates to an embodiment in a single piece based on a metal sheet of this type.

This plug is quite satisfactory for a fixing in a hollow wall in which the plug is placed by the succession of stages involving:
- drilling a hole with a diameter slightly greater than the regular external diameter of the head barrel in the wall from an accessible face thereof,
- introducing the plug coaxially into the hole until the flange rests flat round the hole on the aforementioned accessible face, the plug being selected such that the longitudinal dimension of its barrel coincides approximately with that of the hole,
- pulling the nut barrel longitudinally toward the head barrel by means of the screw to be fixed or a threaded sleeve of a suitable tool so as to cause folding of the bars which are deployed by spreading from the axis in the manner of the spokes of an umbrella and come to rest inside the wall remote from the flange of the head barrel while gripping the wall against the flange and thus immobilising the plug relative to the wall.

A particularly effective fixing is thus obtained because a pull which is then applied to the plug by the screw used, for example, to fasten an object against the accessible face of the wall if the wall is vertical or to suspend an object to the wall if it is horizontal tends to make the nut barrel move further toward the head barrel and consequently to increase the gripping effect of the wall and thus to strengthen the fixing.

However, if an obstacle opposes the deployment of the bars, as may be the case when attempting to place a plug of this type in a solid wall, namely in a blind hole in an accessible face of this wall, or else in a hollow wall but using a plug which is too short, only the transverse forces applied to the wall by the bars inside the hole oppose the extraction of the plug by creating mutual friction, and the currently known embodiment of fixing plugs of the aforementioned type, in which the two branches are connected directly to the nut barrel do not produce a sufficiently high value of these transverse forces when the nut barrel is pulled longitudinally toward the head barrel to attempt to cause the deployment of the bars.

In other words, in their currently known embodiment, plugs of the type mentioned at the outset are poorly suited or even unsuitable for a fixing in a solid wall or in a hollow wall which do not allow the bars to be deployed in the manner of the spokes of an umbrella.

The object of the present invention is to overcome this drawback, in other words to propose a fixing plug of the type mentioned at the outset, which is capable of fixing itself in any type of wall, namely in solid walls as well as in hollow walls without necessitating a particular choice of the longitudinal dimension of the barrel, in particular in the case of hollow walls, in other words, a fixing plug which may be used successfully even if the nature of the wall in question is ignored.

For this purpose, the present invention relates to a fixing plug of the type mentioned at the outset which is characterised in that the third external diameter is greater than the regular external diameter of the nut barrel and in that each bar also comprises the third, approximately rectilinear branch which is disposed between the second branch and the nut barrel which it mutually connects, has a longitudinal dimension substantially smaller than the respective longitudinal dimensions of the first and second branches and is inclined
- to a longitudinal plane including the axis in a direction and with an obliqueness which are the same for all the third branches and
- more markedly than the second branch relative to the axis so as to extend progressively toward it from the third external diameter for connection to the second branch to a fourth external diameter for connection to the nut barrel, the fourth external diameter being smaller than the regular external diameter of the nut barrel.

Tests have shown that this characteristic design of the present invention produces an effective fixing in solid partitions and in hollow partitions. In fact, the connection of the second branches of the bars to the nut barrel which is no longer direct as in the prior art but is via the third branches, enables the bars not only to be deployed similarly to the bars of the prior art in the manner of the spokes of an umbrella in the region of their first and second branches to produce the fixing in a hollow wall when there is no obstacle to such deployment, but also, if there is an obstacle to such deployment, either to be deployed in the region of their second and third branches or in the region merely of their third branches, in particular to produce the fixing in a differently dimensioned hollow wall in comparison with the longitudinal dimensions of the plug, or, in the case of a wall which is solid or is considered as such by comparison of its dimensions in the longitudinal direction with the longitudinal dimensions of the plug, to rest by the second branches of each bar against this wall inside the hole with sufficiently great force and contact pressure to produce an effective fixing against tearing of the plug from the wall even in such a case.

The various type of possible deformation of the bars as a function of the panel in which a plug according to the invention is fixed and the various configurations obtained after deformation will be described in detail in the description hereinafter, and this will confirm the almost universal possibilities for use of a plug according to the invention irrespective of the type of wall on which it is to be fixed. In particular, it will be shown that, before using a plug according to the invention, it is not necessary to know whether the wall on which it is to be fixed is hollow or solid.

Preferably, each third branch has, with respect to a transverse plane, a slope opposed to the slope of the tapping of the nut barrel, and this prevents any resistance encountered when screwing the screw into the nut barrel from being translated, due to friction therebetween, into an inopportune deflection of the three branches of the bars, in other words a deflection thereof when this deflection is not necessitated by the fixing conditions in the wall under consideration.

For example, the slope of each third branch is at about 45° to a transverse plane, wide tolerances being allowed in this respect.

Preferably, whereas the connection of the two branches to the nut barrel, in other words the transition between the fourth diameter and the regular external diameter of the nut barrel is produced by mutually disconnected lugs in currently known plugs of the type concerned, the nut barrel is connected to all the third branches of the bars of the plug according to the invention by an annular longitudinally intermediate transition region generated by revolution round the axis and inclined thereto so as to extend progressively toward it from the regular external diameter of the nut barrel to the external fourth diameter for connection to the third branches. Thus, the respective connections of the third branches to the nut barrel are unable to move relative to one another or relative to the nut barrel in particular during placement of the fixing plug by longitudinal pulling of the nut barrel toward the head barrel. In particular, this prevents inopportune shortening of the plug in the region of this connection, which would end with contact between this connection and the threaded shank of the screw and therefore to a risk of damaging the thread thereof.

Similarly, the head barrel is preferably connected to each of the first branches by an annular longitudinally intermediate transition region generated by revolution round the axis and inclined thereto so as to extend progressively toward it from the regular external diameter of the head barrel to the first external diameter for connection to the first branches, which results in the same advantages.

For better control of the position which the bars adopt when placed in a hollow wall, by bending between their first and second branches in the sense of deployment in the manner of the spokes of an umbrella when the dimensions of the hollow wall lend themselves in the longitudinal direction of the plug, it is preferably provided that there is an even number of bars grouped in pairs of circumferentially mutually adjacent bars of which the second branches are circumferentially mutually connected by a transverse stiffener in the immediate vicinity of their connection to the first branches. The bend between the first and second branches of each bar, in the direction in which their mutual connection moves away from the axis, when the longitudinal directions of the wall lend themselves, is also advantageously assisted by the fact that, in a preferred embodiment of the present invention, the first branch of each bar has, facing the axis, in the immediate vicinity of its connection to the second branch, a circumferential groove for locally reducing the resistance of the bar to bending in the direction remote from the axis between the first and second branches.

Furthermore, the deformation of the first branches themselves is controlled under certain conditions for placement of the plug according to the invention, in other words for longitudinal dimensioning of the wall by providing, according to a preferred embodiment, that the first branches have, in the circumferential direction, a width which diminishes progressively from the connection to the head barrel toward the connection to the second branches.

On the other hand, the second branches preferably have, in the circumferential direction, a substantially constant width greater than that which the first branches have in the circumferential direction at their connection to the second branches and this assists deformation of the first branches relative to the second branches under certain condition of placement of the plug, linked to the longitudinal dimensioning of the wall.

For their part, the third branches preferably have in the circumferential direction, a substantially constant width smaller than the width which the second branches have, in the circumferential direction, at their connection to the third branches.

Different characteristics of deformability are thus created between the first, second and third branches of each bar, and the value of the characteristics for the various types of wall in which the plug according to the invention is placed will emerge from the description hereinafter.

Preferably, in a plug according to the invention as in a plug of the prior art, at least the head barrel, the nut barrel and the bars consist of a single piece of metal in the form of a strip which has been cut out and shaped, in particular by winding round the axis and closure on itself in the circumferential direction, the head barrel and the nut barrel having a respective seam 33, 36.

A plug according to the invention may thus be produced under the same conditions of simplicity, economy and robustness as the plugs of the prior art; in particular, although the presence of the third branches of each bar involves a different configuration of the tool for cutting the strip of material before winding, it does not involve an additional fabrication operation.

As in the prior art, the seam of the nut barrel may be rectilinear and longitudinal but it is preferably helical and oriented so as to have, with respect to a mean transverse plane, a slope opposed to that of the third branches so it is better able to withstand, without deformation of the nut barrel, the thrust which the slopes of the closest third branches transmit to the nut barrel by reaction when the nut barrel is pulled longitudinally toward the head barrel when placing the plug.

Preferably, application of these forces which is as direct as possible is assisted by providing the seam of the nut barrel directly adjacent to the connection between one of the third branches and the nut barrel downstream of said connection with reference to a circumferential direction of angular offset of the connection between the third branches and the nut barrel relative to their connection to the second branches.

On the other hand, as in the prior art, the seam of the head barrel may be rectilinear and longitudinal.

As in certain prior art plugs, the tapping of the nut barrel may be that of a nut which is attached integrally in the nut barrel but, preferably, as in the case of the plug described in the above-mentioned French Patent No. 2 546 989, the nut barrel comprises a coaxial tubular internal fold which has said axial tapping directly.

For the sake of mechanical strength, this fold of the nut barrel is preferably continuous in the circumferential direction.

A fold of this type may be made in various ways inside the nut barrel but, according to a preferred embodiment following from the embodiment of the plug described in said French Patent No. 2 546 989 when the head barrel, the nut barrel and the bars consist of a single piece of metal in the form of a cut out and shaped strip, this fold is made in a single piece with the nut barrel by providing that said piece comprises a transverse annular cap of nut barrel forming said folds of the nut barrel, which nut barrel cap is continuous in the circumferential direction and connected to the nut barrel by at least one circumferential fold longitudinally remote from the connection of the first branches to the nut barrel.

It may optionally be provided that, according to a further known technique, two circumferential folds which are diametrically opposed to one another with reference to the axis connect the cap of the nut barrel to the nut barrel, the nut barrel being produced by folding two parts of the aforementioned metal strip, one on either side of the annular cap, like the bars and the head barrel in this technique.

It is preferably provided, however, that there is a single circumferential fold located diametrically remote from the seam of the nut barrel with reference to the axis and that the nut barrel cap is connected by mating in shape with the nut barrel in the region of its seam as described in said French Patent No. 2 546 989, and this optimises manufacture by allowing, on the one hand, the use of a strip which is smaller in a direction corresponding to that of the longitudinal axis of the plug to be produced and, on the other hand, better control of the configuration of the plug, in particular with regard to its head barrel.

The head barrel itself may advantageously have a coaxial tubular internal fold for coaxial guidance of the threaded shank of the screw, this head barrel fold advantageously being continuous in the circumferential direction for the sake of mechanical strength, as already described in said French Patent No. 2 546 989.

Similarly, as described in this earlier French patent, if the head barrel, the nut barrel and the bars consist of a single piece of metal in the form of a cut out and shaped strip, this piece advantageously comprises a transverse annular cap of head barrel forming the flange and said fold of the head barrel, which head barrel cap is continuous in the circumferential direction and connected to the head barrel with at least one circumferential fold longitudinally remote from the connection of the first branches to the head barrel. In the case of this transverse annular cap for the head barrel as in the case of the transverse annular cap for the nut barrel, there is preferably a single circumferential fold which is located diametrically remote from the seam of the head barrel with reference to the axis and in that the head barrel cap is connected by mating in shape with the head barrel in the region of its seam, as described in said French Patent No. 2 546 989.

Any other disposition, in particular already known as such, may also be provided on a plug according to the invention and, in particular, it is preferably provided that the flange has claws which project longitudinally round the head barrel and are fixed in the wall round the hole, in particular to prevent rotation of the plug within the hole when the screw itself is used to pull the nut barrel longitudinally toward the head barrel when placing the plug. The flange may also be made easily detachable from the head barrel for cases where the plug is to be made as discreet as possible after placement.

Further characteristics and advantages of a plug according to the invention will emerge from the following description which relates to a nonlimiting embodiment and to various fixing conditions for this plug in a wall and to the accompanying drawings which form an integral part of this description.

Fig. 1 and 2 are lateral elevations of a fixing plug according to the invention in two mutually opposed directions perpendicular to its longitudinal axis and designated I and II respectively in Fig. 3.

Fig. 3 is an end view of this plug in a longitudinal direction from the head barrel toward the nut barrel and designated III in Fig. 2.

Fig. 4 is a section of this plug through a longitudinal half plane issuing from its axis and designated IV-IV in Fig. 2.

Fig. 5 is a plan view of a blank obtained by cutting out and die stamping a strip of metal and intended to form, in a single piece, the plug according to the invention illustrated in Fig. 1 to 4.

Fig. 6 is a section of this blank through a mean plane designated VI-VI in Fig. 5 and constituting a respective plane of symmetry for the regions of the bank intended to form the respective head barrel, first and second branches of the bars, nut barrel cap, apart from the tapping thereof, and the head barrel cap, except the fixing claws thereof.

Fig. 7 is a view similar to that in Fig. 6 of the folding applied to this blank before it is wound and before the head barrel and nut barrel hats are folded from it to form the plug according to the invention.

Fig. 8 to 10 show the use of a plug according to the invention in a solid wall after drilling of this wall but before insertion of the plug, after complete insertion of the plug without deformation thereof and after fixing of the plug by plastic deformation of the bars thereof respectively in a section through a plane passing through the axis of the plug, apart from the plug which is shown in elevation in the same direction as in Fig. 1.

Fig. 11 to 14 show the deformation cinematics of the plug in this case in a sectional half plane corresponding to the portion of Fig. 8 to 10 located above the axis of the plug, the states shown in Fig. 11 to 14 corresponding to the states shown in Fig. 9 and 10 and the states shown in Fig. 12 to 13 corresponding to the intermediate states of deformation of the bars respectively.

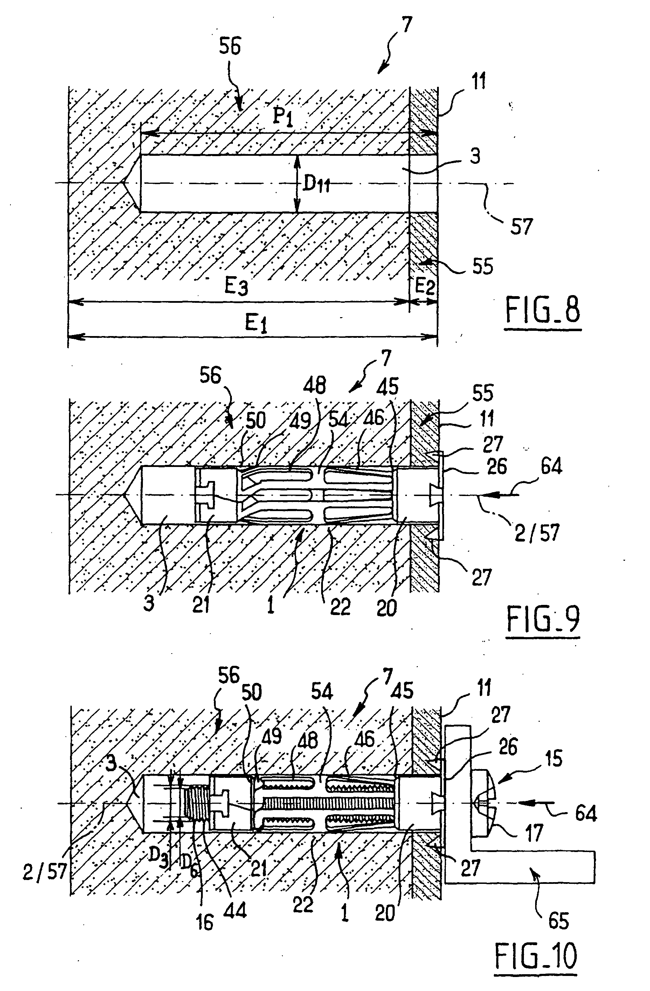

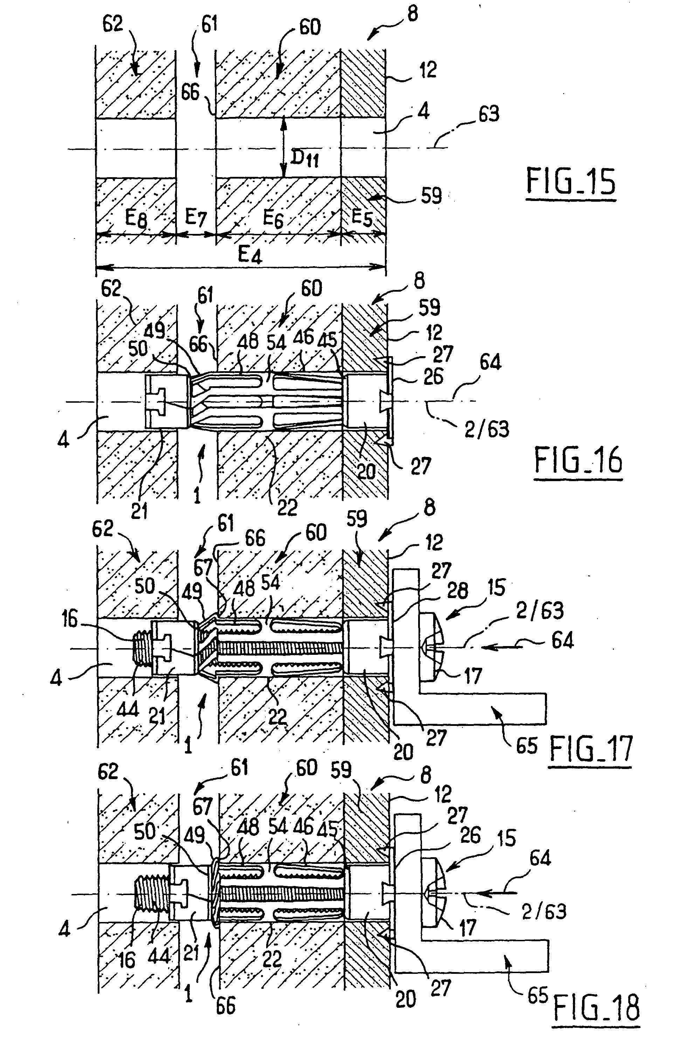

Fig. 15 to 18 show, in views similar to those in Fig. 8 to 10, the use of the plug according to the invention in the case of a wall made of alveolated material such as building blocks or hollow bricks which offer the plug sufficient thickness in the longitudinal direction to allow gripping of the plug by plastic deformation of the bars longitudinally away from the head flange after provision of the hole in the wall, coaxial insertion of the plug in this hole without plastic deformation of the plug bars, initiation of plastic deformation of the bars to provide a first fixing of the plug and completion of plastic deformation of the bars to reinforce this fixing, respectively.

Fig. 19 to 21 are views corresponding to those in Fig. 11 to 14 of the state of the plug shown in Fig. 16, an intermediate state between the states of the plug shown in Fig. 16 and 17 and the state of the plug shown in Fig. 17 which is merely accentuated in the state illustrated in Fig. 18 respectively.

Fig. 22 to 24 are views similar to those in Fig. 8 to 10 of the use of the plug in a hollow wall made, for example, of alveolated material such as building blocks or hollow bricks which grip the plug with a smaller thickness than in the embodiment shown in Fig. 15 to 18 and 19 to 21 after provision of the hole for receiving the plug but without the plug, after insertion of the plug without plastic deformation of the bars thereof then after plastic deformation of its bars respectively.

Fig. 25 to 29 are views similar to those in Fig. 11 to 14 of the successive states of the plug during this use, Fig. 25 corresponding to Fig. 23, Fig. 29 to Fig. 24 and Fig. 26 to 28 to successive states intermediate between those in Fig. 25 and 29.

Fig. 30 to 33 are views similar to those in Fig. 8 to 10 of the use of a plug according to the invention in a wall made of hollow material such as a plaster slab which offers an even smaller thickness along the longitudinal axis of the plug after drilling of the hole but before insertion of the plug, after insertion of the plug into this hole but without plastic deformation of the bars of the plug, after plastic deformation of these bars under conditions capable of producing the fixing and after possible completion of this plastic deformation respectively.

Fig. 34 to 38 are views similar to those in Fig. 11 to 14 of successive states of the plug in the case of this use, Fig. 34 corresponding to the state of the plug in Fig. 31, Fig. 38 to the state of the plug in Fig. 32 and Fig. 35 to 37 to intermediate states between these two states.

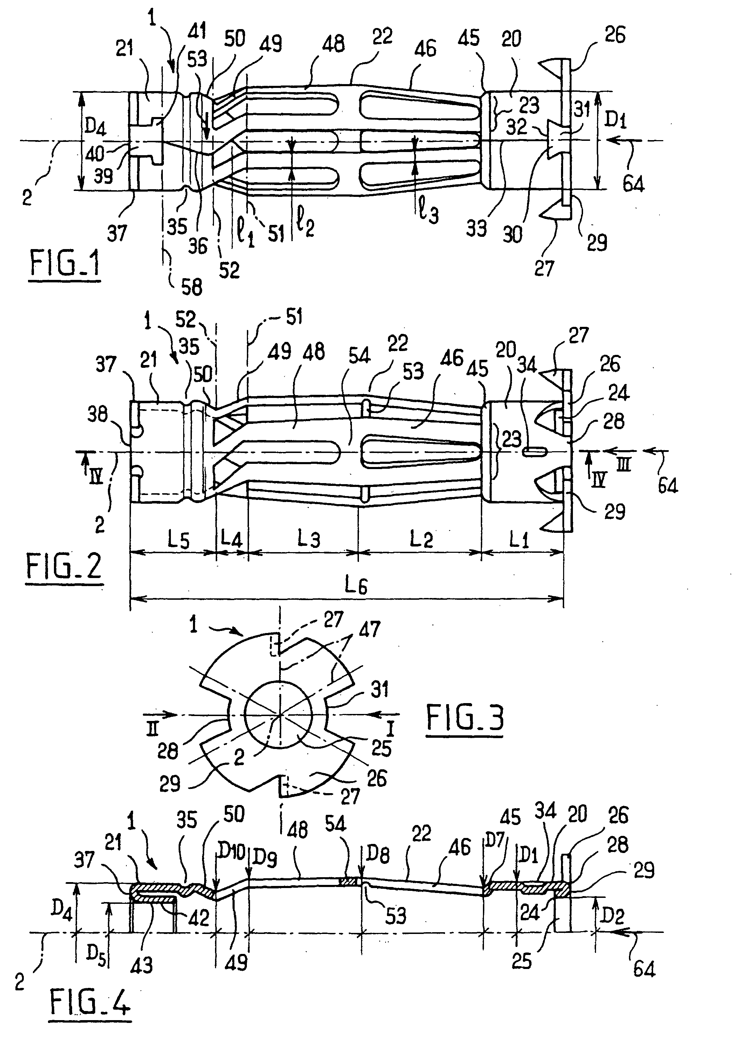

Referring firstly to Fig. 1 to 4, the plug 1 according to the invention is shown as it leaves production and as delivered to its user, in other words also, at least approximately, as presented in an initial state of placement, illustrated in Fig. 9, 11, 16, 19, 23, 25, 31 and 34.

This plug 1 having a longitudinal axis 2 which will serve hereinafter as a reference for the notions of longitudinal or transverse nature, circumferential, radial or diametrical direction and for the derived notions, is intended to be inserted coaxially in a hole 3, 4, 5, 6 drilled in a wall 7, 8, 9 10 via a accessible face 11, 12, 13, 14 thereof perpendicularly to this face in order to receive coaxially and fix in this wall 7, 8, 9, 10 a screw 15 having a threaded shank 16 which is screwed coaxially into the plug 1 and a head 17 placed coaxially so as to project from the face 11, 12, 13, 14 of the wall 7, 8, 9, 10 (Fig. 8 to 14, 15 to 21, 22 to 29 and 30 to 35 respectively with regard to the holes 3, 4, 5, 6, the walls 7, 8, 9, 10, their accessible faces 11, 12, 13, 14 respectively and Fig. 10, 17, 18, 24, 33 with regard to the screw 15, its threaded shank 16 and its head 17).

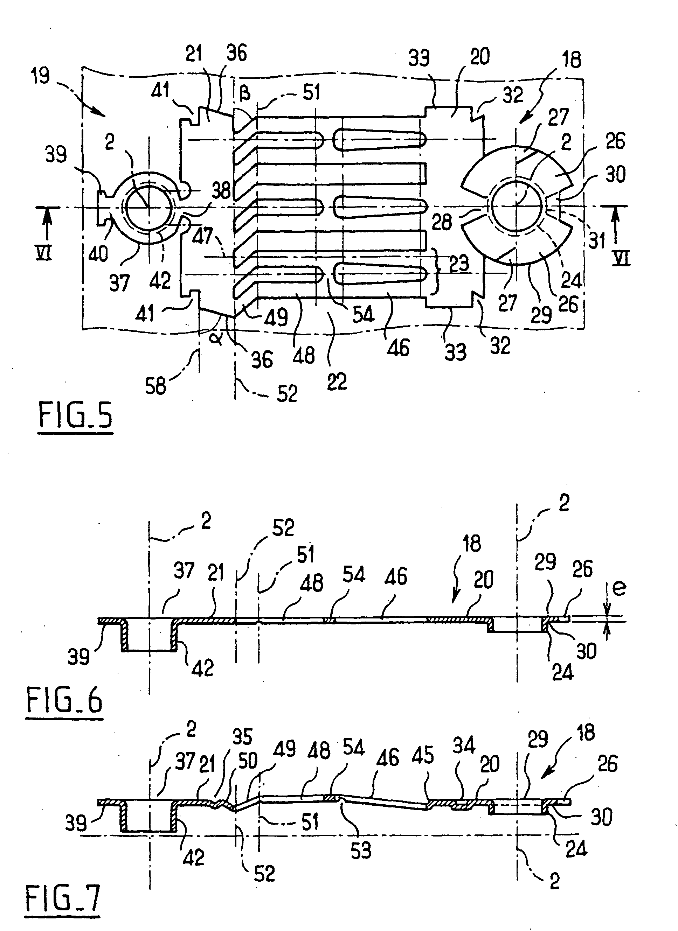

The plug 1 which is preferably produced from a single piece of metal starting from a blank 18 which is itself obtained by cutting out and shaping a flat strip 19 of uniform thickness e (Fig. 5 to 7) in a manner similar to that described in said French Patent No. 2 546 989, although other embodiments may also be considered, comprises, in a manner known *per se* two longitudinally extreme barrels 20 and 21 which are mutually longitudinally opposed and are mutually connected by a plurality of bars 22 having an approximately longitudinal general orientation respectively, uniformly distributed round the axis 2 and disposed between the two barrels 20 and 21. In the example illustrated, there are six of these bars 22 grouped in pairs of two circumferentially mutually adjacent bars 22 in a manner which will be described hereinafter, but other numbers of bars 22 could be selected without departing from the scope of the present invention, these numbers preferably being even to allow two circumferentially mutually adjacent bars 22 to be grouped in pairs 23. The bars 22 are mutually identical and may be folded by plastic deformation, the present invention offering more possibilities than the prior art in this regard in combination with an original design of the bars which will be described hereinafter.

The barrels 20 and 21, on the other hand, have a known general tubular configuration generated by revolution round the axis 2.

The barrel 20 or head barrel, has a predetermined regular external diameter D₁ in the direction away from the axis 2. In a manner known *per se,* longitudinally remotely from its connection to the bars 22 and the barrel 21 it forms a coaxial tubular internal fold 24 having a regular diameter D₂ toward the axis 2 smaller than D₁ but at least equal, and preferably approximately equal, to the diameter D₃ of the threaded shank of the screw 15 at the crest of the thread so that the fold 24 defines a free coaxial passage 25 for the threaded shank 16 of the screw 15 under conditions capable of guiding this threaded shank 16 coaxially during the screwing of the screw, which will be described hereinafter, and of then providing a radial support for the threaded shank 16, thus avoiding offsetting of the screw 16 from the plug 1 even if the screw 15 is subjected to significant radial forces. Furthermore, longitudinally remotely from its connection to the bars 22 and remotely from the nut barrel 21, the head barrel 20 carries an integral extreme transverse flange 26 capable of resting flat on the face 11, 12, 13, 14 of the wall 7, 8, 9, 10 round the hole 3, 4, 5, 6 during and after placement of the plug 1 on the wall. Preferably, as shown, the flange 26 has claws 27 which project longitudinally round the head barrel 20, for example in an apportionment of two claws 27 occupying diametrically opposed positions, these claws 27 penetrating the face 11, 12, 13, 14 of the wall 7, 8, 9, 10 during placement of the plug 1 so as to oppose rotation thereof on itself inside the hole 3, 4, 5, 6 during placement of the plug 1, under conditions which will emerge from the description hereinafter.

In a manner known *per* se, described in said French Patent No. 2 546 989, the folds 24 and the flange 26 are continuous in a circumferential direction and constitute two parts of a transverse annular cap 29 which is itself continuous in a circumferential direction, connected to the head barrel 20 at two diametrically opposed locations longitudinally remotely from the connection of the head barrel 20 to the bars 22 in the nonlimiting example illustrated. More precisely, in this nonlimiting example, the head barrel cap 29 is connected to the head barrel 20 on the one hand by a circumferential fold 28 and on the other hand, diametrically opposed from this circumferential fold 28, by a dovetail-shaped lug 30 which is folded back from the cap 29 round a further circumferential fold 31 in a longitudinal direction so as to engage in a mating cut out 32 in the head bar 20 and to be held there by mating in shape to produce a preferably removable connection between the cap 29 and the head barrel 20. In a manner known *per se* described in said French Patent No. 546 989, the cut out 32 straddles a longitudinal rectilinear seam 33 of the head barrel 20, produced by winding a corresponding region of the blank 18 round the axis 2 whereas the cap 29 in which the fold 24 is formed by die stamping of the blank 18 is folded back by 90° round the fold 28, diametrically opposed to the seam 33, in the same way as the lug 30 and the claws 27 are obtained by localised cutting out and folding back at 90° from the portion of the blank 18 constituting the cap 29. To reinforce the head barrel 20 in the vicinity of the fold 28 and thus to locate it exactly, the blank 18 has, in a region of its portion corresponding to the head barrel 20 and in the vicinity of its portion intended to form the fold 28 a longitudinally oblong sleeve 34 offset towards the axis 2 with respect to the regions of the barrel 20 adjacent thereto when the plug is formed.

The barrel 21, or nut barrel, has a design similar to that of head barrel 20 and also known *per se* apart from a few details.

This nut barrel 21 has a predetermined regular external diameter D₄ which is at most equal to D₁ and preferably substantially equal to D₁, as illustrated. However, in a localised region longitudinally adjacent to its connection to the bars 22, the nut barrel 21 has an annular stiffening sleeve 35 generated by revolution round the axis 2 and turned toward it, owing to the arrangement of a rectilinear sleeve in the region of the blank 18 corresponding to the nut barrel 21 which, like the head barrel 20, is produced by winding the blank 18 round the axis 2 and thus has a seam 36 on itself in the circumferential direction. This seam could be longitudinal and rectilinear like the seam 33 but, in the preferred embodiment of the invention illustrated, it is helical about a transverse plane 58 and has a slope in the same direction as the thread of the threaded shank 16 with a value much higher than 45° and, for example, of about 80°, this figure however being mentioned merely as a nonlimiting example.

Longitudinally remotely from its connection to the bars 22 and remotely from the head barrel 20, the nut barrel 21 has an integral transverse annular cap 37 which is continuous in the circumferential direction and connected integrally to the nut barrel 21 in the same way as the cap 29 of the head barrel 20 is connected thereto. More precisely this cap 37 of the nut barrel 21 is connected thereto in two diametrically opposed regions, namely on the one hand by a circumferential fold 38 folded at 90° in a region longitudinally aligned with the circumferential fold 28 for assembly of the cap 29 of the head barrel 20 therewith in other words diametrically opposed to the seam 36 and, on the other hand, by a T-shaped lug 39 folded back by 90° from the cap 37 toward the connection of the nut barrel 21 to the bars 22 and toward the head barrel 20 round a circumferential fold 40 so as to be accommodated in a complementary cut out 41 made in the nut barrel 21 and straddling the seam 36 so as to produce a mutual connection by mating of shapes.

The cap 37 of the nut barrel 21 forms, relative thereto, a coaxial tubular internal fold 42 produced by die stamping a sleeve in a portion of the blank 18 forming the cap 37 and having a minimal internal diameter D₅ smaller than D₄ and equal to the diameter D₆ of the threaded shank 16 of the screw 15 at the root of the thread, the fold 42 being provided directly with a coaxial tapping 43 complementary with the threading 44 of the threaded shank 16. To increase the mechanical strength, the tubular fold 42, like the entire cap 37 of the nut barrel 21, is continuous in the circumferential direction.

Outside the respective folds 28, 40 and the respective lug 30, 39 for integral connection to the respectively corresponding barrel 20, 21, each of the hats 29, 37 rests longitudinally on the respectively corresponding barrel 20, 21 round the respectively corresponding folds 24, 42.

The arrangements just described are known *per se* to a person skilled in the art, apart from the preferred helical form of the seam 36 of the nut barrel 21 on itself, and could be replaced by equivalent dispositions without departing from the scope of the present invention.

In particular, it is understood that, in a further embodiment of the plug according to the invention, the tapping 43 could also be transferred to the interior of the nut barrel 21, for example in the form of a nut inserted integrally therein.

The design of the bars 22 and the design of the head and nut barrels 20 and 21 at their connection to the bars 22 are original as such and will now be described.

For the sake of simplicity, reference will be made for this purpose to a longitudinal direction 64 extending from the head barrel 20 toward the nut barrel 21 and corresponding to the direction of screwing of the screw 15 by its threaded shank 16, into the tapping 43, similarly to the direction of insertion of the plug 1 into a hole 3, 4, 5, 6 in a wall 7, 8, 9 10. Referring to this direction 64, the cap 29 of the head barrel and the cap 37 of the nut barrel 21 constitute the respective upstream and downstream limits of the plug 1.

Whereas the barrel 20 has its regular external diameter D₁ uniformly over the majority of its longitudinal dimension L₁, measured from the flange 26, it has, in the immediate vicinity of its connection to the bars 22, a longitudinally intermediate annular transition region 45 therewith, generated by revolution round the axis 2 and inclined thereto, for example by an angle (not designated) of about 45° so that it progressively approaches it in the direction 64, passing from the external diameter D₁ to a diameter D₇ smaller than the diameter D₁ but at least eaual and preferably greater than the sum of the diameter D₂ of the passage 25 or of the diameter D₃ of the thread 44 of the screw 15 at the crest of the thread and twice the thickness e of the blank 18. Like the entire head barrel 20, this transition region 45 is circumferentially continuous apart from the presence of the seam 33 of the head barrel 20 on itself, including in the region 45.

In this region 45, the barrel 20 is connected to all the bars 22 and more precisely to a first rectilinear branch 46 of each of them.

Each of the mutually identical rectilinear branches 46 has at least approximately a mean longitudinal plane 47 including the axis 2, the planes 47 being evenly distributed angularly round this axis 2 and more precisely uniformly distributed round this axis in the example illustrated. The seam 33 closing the head barrel 20 on itself is located between two of these planes 47 and more precisely between the respective connections of two mutually adjacent branches 46 to the head barrel 20. Each of the branches 46 has a predetermined longitudinal dimension L₂ to its connection to a second branch 48 of the same bar 22, which branch 48 is also rectilinear and has at least approximately the same mean plane 47 as the corresponding branch 46 and a longitudinal dimension L₃ of approximately the same size as the longitudinal dimension L₂. The branches 48 are mutually identical, like the branches 46.

On the other hand, the branches 46 and 48 have mutually opposed inclinations to the axis 2 so as to extend progressively away from and toward it respectively in the direction 64. More precisely, each bar 46 extends progressively away from the axis 2 from its connection to the transition region 45 in the region of which it has the external diameter D₇, to an external diameter D₈ greater than the diameter D₇, namely at least equal to and preferably greater than the diameter D₁. The branches 46 and 48 of a same bar are mutually connected along this external diameter D₈ and, from the connection to the branch 46, the branch 48 extends progressively toward the axis 2 in the direction 45 to an external diameter D₉ smaller than the diameter D₈ but greater than the regular external diameter D₄ of the nut barrel 21.

According to the present invention, the respective branches 48 of a bar 22 are not connected directly to the nut barrel 21 longitudinally remote from the mutual connection of the branches 46 and 48, but a third branch 49 of each bar 22 produces this connection by passing from the external diameter D₉ which has at its connection to the respective branch 48 to an external diameter D₁₀ smaller than the regular external diameter D₄ of the nut barrel 21. This diameter D₁₀ may be equal to the diameter D₇ and, like it, must be at least equal to and preferably greater than the sum of twice the thickness e of the blank 18 and of the diameter D₂ of the passage 25 or of the diameter D₃ of the thread 44 of the threaded shank 16 of the screw 15 at the crest of the thread so as to prevent contact with this shank at the connection between the branches 49 and the nut barrel 21 and also at the connection between the branches 46 and the head barrel 20. These conditions must also be met in the region of the sleeves 34 and 35 of the head and nut barrels 20 and 21.

To produce the transition between its regular external diameter D₄ and the external diameter D₁₀ for connection to the third branches 49 of the bars 22, the nut barrel 21 has, in a longitudinally localised manner in the vicinity of this connection, a longitudinally intermediate annular transition region 50 generated by revolution about the axis 2 and inclined thereto so as to extend progressively away from it in the direction 64 from the external diameter D₁₀ for connection to the third branches 49 of the bars 22 to the external diameter D₄ which the nut barrel has over the majority of its longitudinal dimension L₅ apart from the transition region 50 and the groove-shaped sleeve 35. For example, like the transition region 45, the transition region 50 has the form of a truncated cone generated by revolution about the axis 2 and forms an angle of about 45° thereto, this value being mentioned as a non-limiting example. Furthermore, like the transition region 45, the transition region 50 is continuous in the circumferential direction, apart from the presence of the seam 36 which affects it like the entire nut barrel 21.

The third branches 49 of each bar 22 have a longitudinal dimension L₄ substantially smaller than the longitudinal dimensions L₂ and L₃ of the branches 46 and 48 respectively. They are rectilinear and inclined in the same direction and with the same obliqueness to the mean longitudinal plane 47 of the respectively corresponding second and third branches 46 and 48 when considering the flat blank 18; although they mate with a truncated cone-shaped geometric surface (not shown), generated by revolution round the axis 2 when the blank 18 is wound round this axis, they maintain an approximately rectilinear shape and such obliqueness to the mean plane 47 of the corresponding first and second branches 46 and 48, at the same time allowing for the aforementioned obliqueness value, of the longitudinal dimension L₄ and the diameters D₉ and D₁₀. The aforementioned obliqueness of each branch 49 is defined by a slope β opposed to the slope of the tapping 43 of the fold 42 of the nut barrel 21 and of a value preferably of approximately 45° which each branch 49 has relative to any sectional plane perpendicular to the axis, namely for example a transverse plane 51 along which each branch 49 is connected to the corresponding branch 48 with the external diameter D₉ or a transverse plane 52 along which each branch 49 is connected to the transition region 50 of the nut barrel 21 with the external diameter D₁₀.

In view of the difference between the diameters D₉ and D₁₀, each branch 49 is inclined not only relative to the mean plane 47 of the corresponding branches 46 and 48 but also relative to the axis 2, to a greater extent than the corresponding branch 48 owing to the substantial difference between the dimensions L₃ and L₄ so as to extend the wall progressively toward the axis 2 in the direction 64 while passing from the external diameter D₉ to the external diameter D₁₀.

Preferably, as illustrated, the seam 36 of the nut barrel 21 of which the slope α is opposed to the slope β of the branches 49 is directly adjacent to the connection between one of these branches 49 and the nut barrel 21 downstream from this connection with reference to a circumferential direction 53 of angular offset of the connection of the branches 49 to the nut barrel 21 relative to their connection to the respectively corresponding branches 48.

In a circumferential direction, in other words also along any transverse sectional plane, such as the plane 51 located at their mutual connection, the branches 49 and 48 have the same respective dimension or width I₁, I₂, the width I₂ of each branch 48 being greater than the width I₁ of each branch 49. On the other hand, each branch 46 has, in the circumferential direction or else in any sectional plane perpendicular to the axis 2, a dimension or width I₃ which diminishes progressively from the connection to the head barrel 20, namely more precisely to the transition region 45 thereof, to the connection to the respectively corresponding branch 48, the value of I₃ being smaller than that of I₂ in the region of this connection whereas the value of I₃ is approximately equal to the value of I₂ at the connection between the branches 46 and the transition region 45 of the head barrel 20.

The branches 46, 48, 49 also have a uniform thickness which is the thickness e of the blank 18, but each branch 46 has, in the immediate vicinity of its connection to corresponding branch 48, a circumferential groove 53 which is internal, in other words facing the axis 2, so as locally to reduce the resistance of the bar 22 to bending in the direction away from the axis 2 of the connection between each of the branches 46 and the branch 48 corresponding thereto.

Furthermore, in the preferred embodiment illustrated, the bars 22 are connected to one another not only by the transition regions 45 and 50 of the head and nut barrels 20 and 21 but also in the immediate vicinity of the mutual connection of the branches 46 and 48.

More precisely, as mentioned hereinbefore, the bars 22 are grouped in pairs 23 which are mutually adjacent in the circumferential direction, of two bars 22 which are themselves mutually adjacent in the circumferential direction, and the branches 48 of these two bars 22 of each pair are mutually connected circumferentially in the immediate vicinity of their connection to the corresponding branches 46 by a transverse reinforcement 54 produced integrally with the bars 22, in other words issuing, like them from the blank 18 and adapted to prevent the two bars 22 of each pair 23 from spreading apart in the region of the mutual connection of the branches 46 and 48, in particular when the bars 22 deflect away from the axis 2 in the region of this connection.

Advantageously, the diameters D₁, D₂, D₄, D₅, D₇, D₈, D₁₀ are selected according to the prior art, in particular as a function of the commercially available standardised diameters D₃ and D₆ of the screws 15, the value of the diameter D₉ being intermediate between the respective values of the diameters D8 and D4. Similarly, the longitudinal dimensions L₁, L₂, L₃, L₅ may also correspond almost to the prior art since, for a respective predetermined value of each of the aforementioned diameters, a range of plugs 1 may be provided of which the longitudinal dimensions L₁ differ for the same value of the longitudinal dimensions L₂, L₃, L₅ according to the prior art and for the same value of L₄ which is substantially smaller than that of L₂ or L₃ and, for example, about one third of the value of L₂ or L₃, this proportion merely being mentioned as a nonlimiting example.

However, the dimension L₁ of the head barrel 20 of a plug 1 according to the invention is much smaller than in the prior art in so far as a plug 1 according to the invention may be inserted and fixed in a wall 7, 8, 9, 10 without the need to know beforehand whether this wall 7, 8, 9, 10 is solid or hollow and, if it is hollow, to know what longitudinal grip dimension it can offer the plug 1, as will emerge from the description hereinafter.

In fact, a plug 1 according to the invention may be fixed in any type of wall 7, 8, 9, 10, providing it has sufficient mechanical strength.

Fig. 8 to 14 show the insertion and fixing of a plug 1 according to the invention in a solid wall 7. The term "solid wall" here denotes a wall having a thickness E₁, perpendicularly to its accessible face 11, greater than a longitudinal dimension L₆ of the plug 1 at rest, in other words, as shown in Fig. 1 to 4, this longitudinal dimension L₆ being equal to the sum of the longitudinal dimensions L₁, L₂, L₃, L₄, L₅. In the example illustrated, the thickness E₁ consists, for a portion adjacent to the face 11, of the thickness E₂ of a slab or layer of plaster 55 defining the face 11 and, for the remainder, by the thickness E₃ of a solid material 56 such as concrete or solid bricks. Preferably, the plug 1 to be inserted and fixed in the wall 7 is selected such that the longitudinal dimension L₁ of its head barrel 20 is at least equal to the thickness E₂ and preferably greater than it, as in the example shown in Fig. 8 to 14, which is possible if the thickness E₂ is known at least approximately; if the thickness E₂ is not known or if the thickness E₁ consists of one and the same solid material such as concrete or solid brick, however, the dimension L₁ may be selected freely.

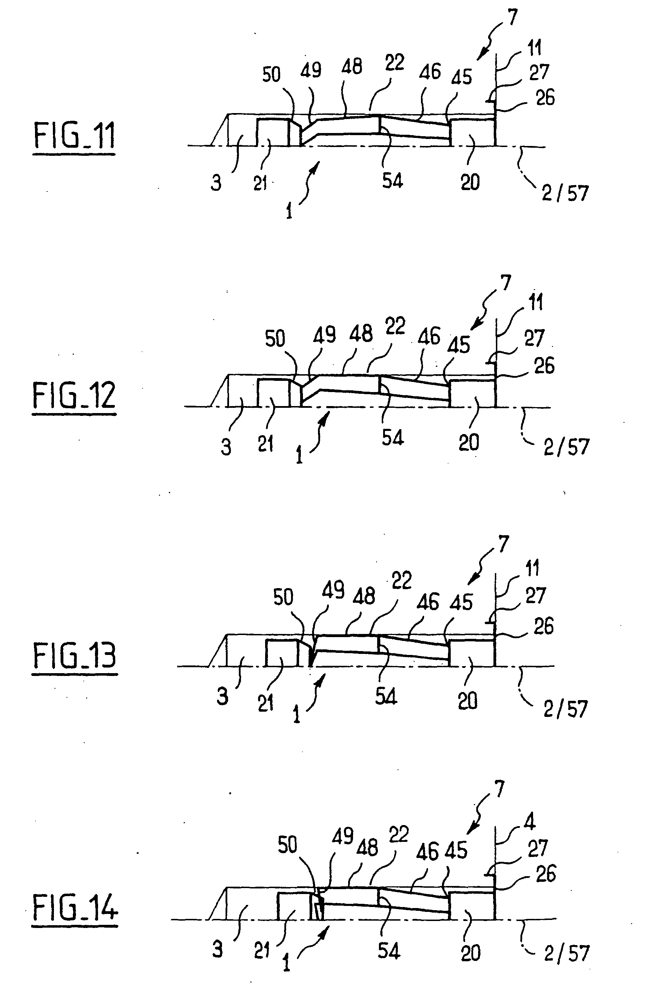

A first stage of insertion and fixing of the plug 1 according to the invention in the wall 7 involves, as shown in Fig. 8, drilling the hole 3 in this wall 7 from its accessible face 11 and along an axis 57 perpendicular thereto, while giving this hole 3, transversely to the axis 57 a constant diameter D₁₁ which is greater than the diameter D₁ but at most equal to and preferably slightly smaller than the diameter D8 over a depth P₁ at least equal to L₆ and preferably greater than L₆; however, this depth P₁ is smaller than E₁ in the example illustrated so the hole 3 is blind in this case. Then, as shown in Fig. 9 and 11, the plug is inserted coaxially into the hole 3 via the face 11 of the wall 7 in the direction 64 beginning with the nut barrel 21 and continuing until the flange 26 is applied flat to the face 11 round the hole 58, the claws 27 penetrating the layer or slab of plaster 55 and then fixing themselves there and forming an obstacle to subsequent rotation of the plug 1 round the now combined axes 2 and 57 relative to the wall 7. This insertion may necessitate slight forcing by a hammer if, as preferred, the diameter D₁₁ is slightly smaller than the diameter D₈ and/or if the slab or layer of plaster 15 offers a certain amount of resistance to the penetration of the claws 27. If the diameter D₁₁ is slightly smaller than the diameter D₈, this insertion of the plug 1 in the hole 3 is accompanied by a slight deflection which is preferably sufficiently low to be elastic, of the branches 46 and 48 of the bars 22 such that the external diameter in the region of their connection is brought from the value D₈ to the value D₁₁, but D₁₁ is selected such that it is at least equal to D₉ and preferably greater than D₉ to the extent that there is no inversion of the inclination of the branches 48 relative to the axis 2 and shown in Fig. 11.

The plug 1 is then fixed in the wall 7 by applying to the nut barrel 21 a longitudinal pull toward the head barrel 20, itself resting flat via the flange 26 on the face 11, or by using a setting tool common to plugs of the prior art in a manner well known to a person skilled in the art and not illustrated, or by using the screw 15 itself.

For this purpose, the threaded shank 16 of the screw 15 is introduced coaxially into the plug 1 in the direction 64 until the thread 44 of this shank 16 engages with the tapping 43 of the fold 42 of the nut barrel 21 by inserting between the head 17 of the screw 15 and the flange 26 an object 65 to be fixed, as shown in Fig. 10, or else by placing the head 17 of the screw 15 directly opposite the flange 26, in a manner not shown, and the screw 15 is thus screwed in the plug 1 until the head 17 rests flat, indirectly via the object 65 to be fixed or directly in the absence of such an object 65, on the flange 26 and via the flange 26 flat on the face 11 round the hole 3.

Screwing of the screw 15 in the plug 1 is then continued and this is manifested by a gripping effect which tends to bring the nut barrel 21 longitudinally toward the head barrel 20 and causes, in the plug 1, plastic deformations of which the various stages are illustrated in Fig. 12 to 14 respectively; Fig. 14 shows a final state of gripping, also illustrated in Fig. 10, in which the plug 1 is fixed in the wall 7, like the screw 15 via the plug 1 and the object 65 via the screw 15 and the plug 1 if this object 65 has been inserted between the head 17 of the screw 15 and the flange 26 before screwing the screw 15 into the plug 1; otherwise, once the plug 1 has reached the state illustrated in Fig. 10 to 14, the screw 15 is unscrewed from it before being rescrewed by inserting the object 65 between the head 17 and the flange 26 round the threaded shank 16.

During a first phase of this gripping, illustrated in Fig. 12, the resultant longitudinal coming together of the nut barrel 21 and the head barrel 20, whereas the branches 46 and 48 of the bars 22 rest against the wall 7 in the direction away from the now combined axes 2 and 57 and the branches 48 and 49 still have at least approximately their original inclination to the axis 2, is manifested in particular by the application to the branches 48, by the branches 49, of a force tending to move the mutual connection of the branches 48 and 49 away from the axis 2, and this is manifested by a pivoting of the branches 48 and the branches 49 round their respective connection to the corresponding branch 46 and to the transition region 50 of the nut barrel 21, in the direction away from the axis 2 until, as shown in Fig. 12, the branches 48 are applied over the entirety of their longitudinal dimension to the wall 56 inside the hole 3. This movement is accompanied by a relative pivoting of the branches 48 and 49 round their mutual connection and by an accentuation of the obliqueness of the branches 49 relative to the axis 2, but without a significant torsional movement appearing in the plug 1, between the nut barrel 21 and the branches 48 of the bars 22.

As the screwing of the screw 15 in the plug 1 is then continued, on the other hand, the longitudinal coming together of the nut barrel 21 and the head barrel 20 can be accomplished only by means of this torsional movement which, in view of the orientation of the branches 49 relative to the mean plane 47 of the corresponding branches 46 and 48 is manifested by a rotation of the nut barrel 21 in the direction 53 relative to the branches 46 and 48, which have themselves become immobile, and by a progressive accentuation of the inclination of the branches 49 relative to the corresponding plane 47, as shown in Fig. 13.

As the screwing of the screw 15 in the plug 1 is then continued, the longitudinal coming together of the nut barrel 21 and the head barrel 20 can be effected only at the cost of a return of the branches 49 which therefore progressively adopt obliqueness to the axis 2 which is opposed to their original obliqueness, in other words obliqueness in the same direction as that of the transition region 50 of the nut barrel 21 which is progressively accommodated by this transition region 50 between the branches 49 while tending to move these branches as well as their region of connection to the branches 48 away from the axis 2, as shown in Fig. 14. A wedge effect is thus created and tends to place the branches 48 vigorously against the wall 56 in the direction away from the combined axes 2 and 57, and this results in particularly effective fixing of the plug 1 in a completely original manner in comparison with prior art plugs.

Fig. 10 shows the final state of the plug inside the hole 3 and shows, in particular, that the branches 49 are thus folded back practically one against the other in the direction 53 by folding also in the circumferential direction round their connection to the branches 48 and their connection to the transition region 50 of the nut 51.

Fig. 15 to 21 illustrate the insertion and fixing of a plug according to the invention 1 in a wall 8 produced from alveolated material. In this case, the wall 8 obviously has a depth E₄ perpendicularly to its accessible face 12, which is greater than the length L₆ of the plug 1, but this thickness E₄ is distributed over a thickness E₅ substantially equal to L₁ of a layer or slab of plaster 59 defining the face 12, a thickness E₆ of a first solid wall 60 of building blocks or hollow bricks, directly adjacent to the layer or slab 59 and carrying it integrally, a thickness E₇ of an internal space 61 in the building blocks or hollow bricks, and a thickness E₈ of a second wall 62 made of building blocks or hollow bricks, this wall 62 being separated from the wall 60 by the space 61. The thicknesses E₅, E₆, E₇, E₈ are measured perpendicularly to the accessible face 12 of the wall 8 formed by the layer or slab 59 of the first wall 60, of the space 61 and of the second wall 62 and follow one another in this order from the face 12.

In this case, the sum of the thicknesses E₅ and E₆ is between the sum of L₁ and L₂ and the sum of L₁, L₂ and L₃, while remaining lower than the latter sum but closer to it, whereas the sum of E₅, E₆ and E₇ is at least equal to the sum of L₁, L₂, L₃ and at least a substantial portion of L₄, namely preferably the entirety of L₄.

In this case, as shown in Fig. 15, the initial stages of insertion and fixing of the plug 1 involve drilling in the wall 8, from the face 12 thereof and along an axis 63 perpendicular to this face 12, the hole 4 which, for a plug 1 identical to the plug of which the insertion and fixing have been described with reference to Fig. 8 to 14, has the same diameter D₁₁ and the hole 3 and a depth at least equal to the minimum possible value of P₁; depending on the individual case, not illustrated, the hole may be blind and stop, for example, in the wall 62 or else, as illustrated, may be a hole traversing the wall 8 right through.

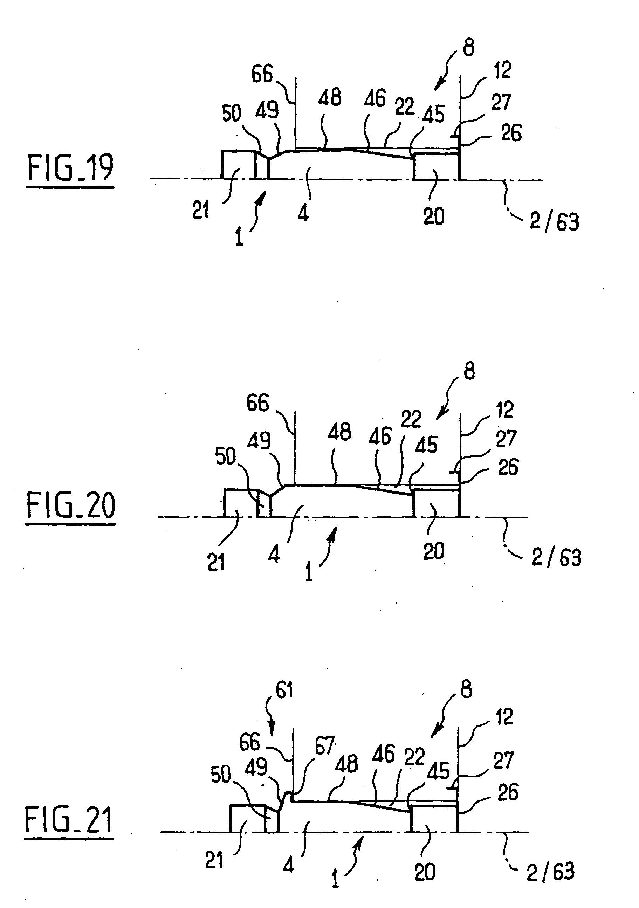

Next, as shown in Fig. 16 and 19, the plug is inserted coaxially in the hole 3 under the same conditions as in the hole 58, namely in particular until the flange 26 rests flat against the face 12 round the hole 4 while being fixed by its claws 27 in the layer or slab 59.

At the end of this insertion, as shown in Fig. 16 and 19, the branches 49 are all situated in the space 61 whereas the branches 48 and the branches 46 are respectively placed in part and in their entirety in the portion of the hole 4 corresponding to the wall 60, the head barrel 20 being engaged in the layer or slab 59. Furthermore, in view of the values given to the thickness E₇ and E₈ in the drawing, the nut barrel 21 is partially engaged in the portion of the hole 4 corresponding to the wall 62 and in part in the space 61 in which the branches 49 are entirely situated but, for different values of E₇ and E₈, it could also be situated either entirely in the space 61 or entirely in the portion of the hole 4 corresponding to the wall 62, in which latter case the branches 49 could be accommodated partially in this portion of the hole 4.

Next, either the known placement tool is used, in a manner not shown, or the screw 15 is screwed coaxially into the plug 1, if necessary after having interposed between the head 17 thereof and the flange 26 an object 65 to be fixed against the wall 8, and the screw 15 is progressively tightened by screwing its threaded shank 16 in the nut barrel 21, and this is manifested by the nut barrel 21 coming longitudinally toward the head barrel 20.

In a first phase, as shown in Fig. 20, this longitudinal coming together of the nut barrel 21 and head barrel 20 is manifested by a pivoting of the branches 48 and 49 round the respective connection to the corresponding branch 46 and to the transition region 50 of the nut barrel 21 in the direction in which their mutual connection moves away from the axis 2 under conditions identical to those described with reference to Fig. 12 until the branches 48 are applied to the wall 60 in the direction away from the now combined axis 2 and 63 over the entirety of the portion of their longitudinal dimension L₃ situated inside the portion of the hole 4 corresponding to the wall 60. The remainder of the longitudinal dimension L₃ of each branch 48 is however caused to straddle the wall 60 inside the space 61 as shown in Fig. 20, and this is an essential difference from what has been described with reference to Fig. 12.

As the screw 15 is then screwed further into the plug 1, the nut barrel 21 applies, via the branches 49 oriented obliquely to the axis 2, an extreme region 67 of each branch 48 thus straddling in the space 61, a thrust in the direction away from the axis 2, and this thrust is manifested by progressive folding of each branch 48 in the direction away from the now combined axis 2 and 63 and by a progressive application of the extreme region 67 of each branch 48 flat against a plane face 66 which the wall 60 presents to the space 61, remotely from the face 12 in the direction of the axis 63 and parallel to this face 12 as shown in Fig. 17 and 21. The inclination of the branches 49 to the axis 2 is thus accentuated, but the branches 49 have not yet pivoted in the circumferential direction relative to the branches 48 and the transition region 50 of the barrel 21.

However, the screwing of the screw 15 into the plug 1 is continued, and the resultant longitudinal coming together of the nut barrel 21 and head barrel 20 can only be brought about by such a circumferential deflection of the branches 49 accompanying a rotation of the nut barrel 21 in the direction 53 relative to the regions 67 of the branches 48 folded back on the face 66 of the wall 60, in other words relative to the connection between the branches 49 and the branches 48 until the branches 49 are folded back on one another as shown in Fig. 18.

The extreme regions 67 of the branches 48 adjacent to the mutual connection of the branches 48 and 49 and folded flat on the face 66 of the wall 60 thus fix the plug 1 in the wall 8 by opposing the coaxial tearing of the plug, the support of these extreme regions 67 on the face 66 being reinforced by a longitudinal pressure which the nut barrel 21 applies to them via the folded back branches 49.

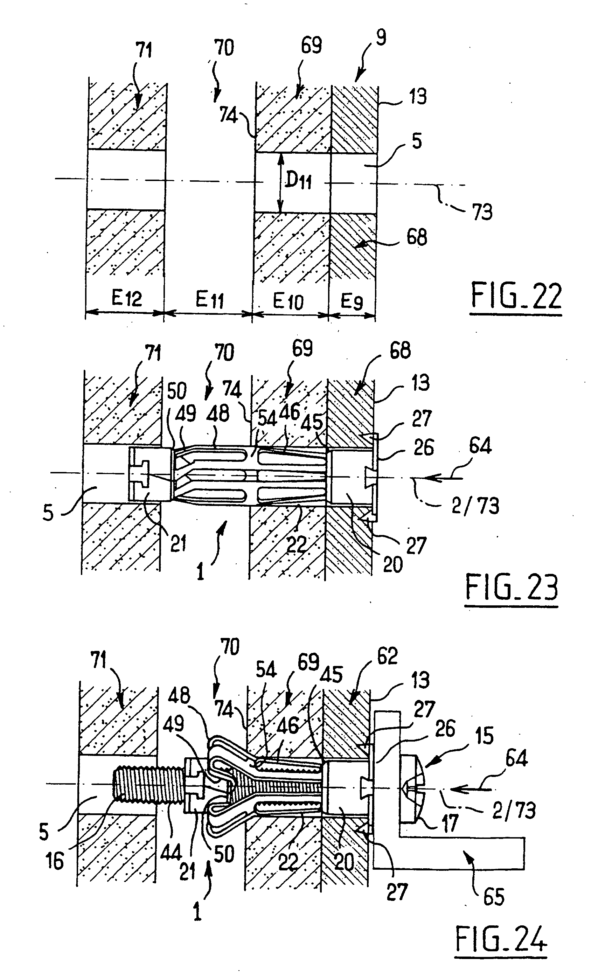

Fig. 22 to 29 shows the insertion and fixing of the same plug 1 in a wall 9 also made of alveolated material but of which the proportions in the thickness direction, in other words perpendicularly to the accessible face 13, differ from those illustrated in Fig. 15 to 21 and described with reference thereto.

A layer or slab of plaster 68, a wall 69, a space 70 and a wall 71 which correspond to the layer or slab 59, the wall 60, the space 61 and the wall 71 respectively and can have the same total thickness, measured perpendicularly to the face 13 are found again in this case, but this total thickness is distributed in this case over a thickness E₉, for example identical to the thickness E₅ and therefore to the dimension L₁ in the example illustrated, for the wall 68, a thickness E₁₀ smaller than the thickness E₆ with respect to the wall 69, a thickness E₁₁ greater than the thickness E₇ in so far as the thickness E₁₀ is smaller than the thickness E₆ and a thickness E₁₂, for example identical to the thickness E₈, with regard to the wall 69, the space 70 and the wall 71 respectively. More precisely, the sum of the thicknesses E₉ and E₁₀ in this example is substantially identical to the sum of the longitudinal dimensions L₁ and L₂ but slightly greater than it, while remaining substantially smaller than the sum of the dimensions L₁, L₂ and L₃.

A first stage of the insertion and fixing of the plug 1 in the wall 9 formed in this way involves, as shown in Fig. 2, drilling the hole 5 which is similar in every way to the hole 4 therein along an axis 73 perpendicular to the face 13 from this face 13. In particular, the hole 5 has the same diameter D₁₁ as the hole 4 of the hole 3 and, depending on the total thickness of the wall 9, this may be a blind hole having a depth defined as the depth P₁ or a through-hole as illustrated.

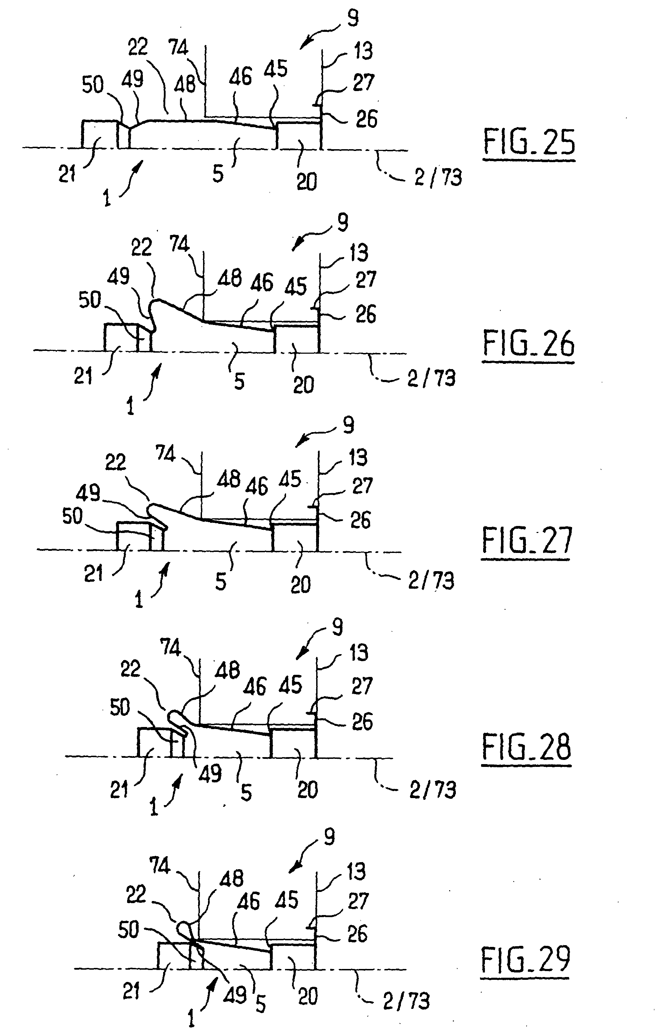

Next, the known placement tool is used in the manner not shown or the plug 1 is inserted coaxially into the hole 5 as shown in Fig. 23 and 25 under the conditions described with reference to Fig. 16 and 19. Owing to the compared values of the sum of E₉ and E₁₀ and the sum of L₁ and L₂, however, only the head barrel 20 and the branches 46 are entirely accommodated within the hole 5, namely in the portions thereof corresponding respectively to the layer or slab 68 and the wall 69 against which the branches 46 rest in the direction away from the now combined axes 2 and 73 in the immediate vicinity of their connection to the branches 48 and of a face 74 of the wall 69 remote from the accessible face 13 along the axis 73 and delimiting the space 70. A portion of the branches 48 directly adjacent to their connection to the branches 46 and a portion of the stiffeners 54 may also be accommodated in the portion of the hole 5 corresponding to the wall 69 but, over the majority of their longitudinal dimension L₃, the branches 48 are accommodated in the space 70 in which the branches 49 are also entirely accommodated. The nut barrel 21 may be accommodated partially in the space 70 and partially in the portion of the hole 5, corresponding to the wall 71, as illustrated, or else may be accommodated entirely in the portion of the hole 5 corresponding to the wall 71, similarly to a portion of the branches 49, or in the space 70.

The screw 15 is then screwed into the plug 1, if necessary while interposing between the head 17 of the screw 15 and the flange 16 an object 65 to be fixed to the wall 9, as illustrated, then the screw 15 is tightened, causing a progressive longitudinal coming together of the nut barrel 21 and the head barrel 20.

In view of the straddle formed by the branches 48 in the space 70 relative to the face 74 of the wall 69 and the inclination of the branches 48 and 49 to the axis 2, this coming together is manifested by application to the branches 48, by the branches 49, at their mutual connection, of a force in the direction away from the axis 2, and this is manifested by a progressive pivoting of the branches 48 round the joint between the hole 5 and the face 74 of the wall 69, the inclination of the branches 48 to the axis 2 then that of the branches 49 being progressively reversed in accordance with Fig. 26, the branches 49 then beginning to exert a pull between their respective connections to the branches 48 and to the transition region 50 of the nut barrel 21. When the screwing of the screw 15 within the plug 1 is then continued as shown in Fig. 27 and 28, in two successive phases, the branches 49 are folded back against the transition region 50 of the nut barrel 21 while pulling the branches 48 in the direction toward the axis 2, as also shown in Fig. 24. Next, as shown in Fig. 29, the nut barrel 21 is applied via its lugs 49 to the lugs 48, more precisely to a localised region of these lugs 48 resting against the transition between the hole 5 and the face 74, and this fixes the plug 1 in the wall 9, more precisely to an assembly formed by the layer or slab 68 and the wall 69.

The ways in which a plug according to the invention 1 cooperates with the wall 8 or the wall 9, described with reference to Fig. 15 to 21 and with reference to Fig. 22 to 29 respectively, also constitute the essential differences between the possibilities offered by a plug according to the invention and the possibilities offered by a prior art plug.

By way of comparison, a prior art plug could only be fixed on a hollow wall 8 or 9 if its head barrel, corresponding to the barrel 20, has a respective longitudinal dimension L₁ equal to the sum of E₅ and E₆ or the sum of E₉ and E₁₀ and providing that the dimension E₇ or E₁₁ of the intermediate space 61 or 70 between the two walls 60, 62 and 69, 71 of the wall 8 or 9 is sufficient to allow unfolding of the branches corresponding to the branches 46 and 48, the prior art plugs not comprising equivalent branches 49 and consequently not being able to deform in the described manner, for which the presence of the branches 49 is essential.

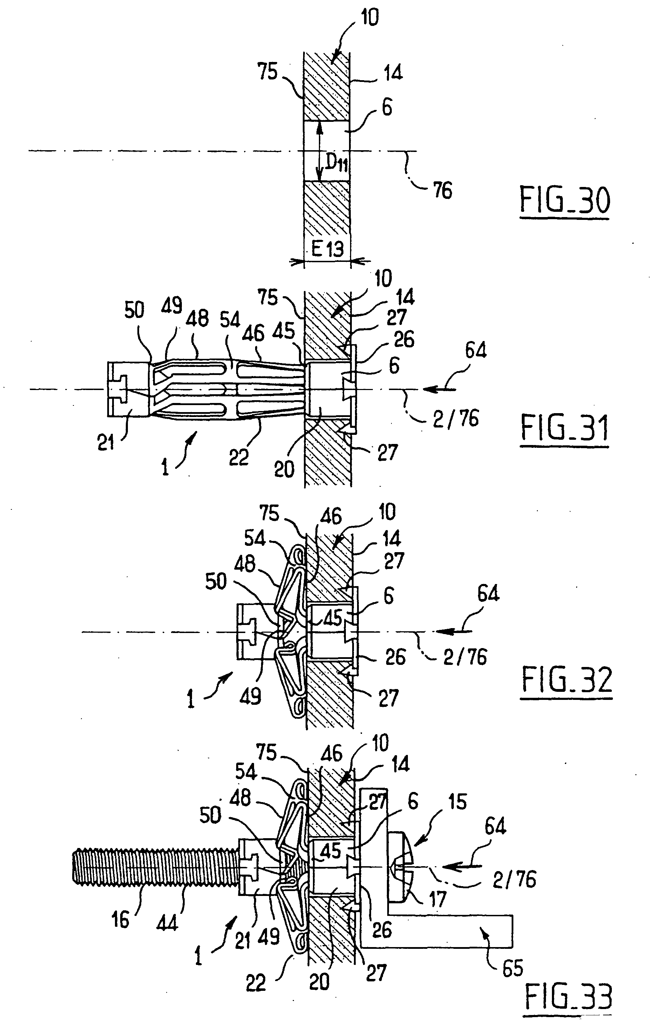

Referring to Fig. 30 to 38, however, a plug 1 according to the invention may also be fixed on a wall 10, such as slab of plaster having a thickness E₁₃, perpendicularly to its accessible face 14, substantially equal to the dimension L₁ of its barrel 20.

In such a case, the hole 6 is drilled in the wall 10 to the diameter D₁₁ as defined hereinbefore from the accessible face 14 of the wall 10, as shown in Fig. 30 which also shows that the hole 6 passes right through the wall 10.

Next, as shown in Fig. 31, the plug 1 is inserted coaxially in the hole 6 until its flange 26 is applied flat against the face 14 round the hole 6 while fixing itself in the hole 10 by the claws 27.

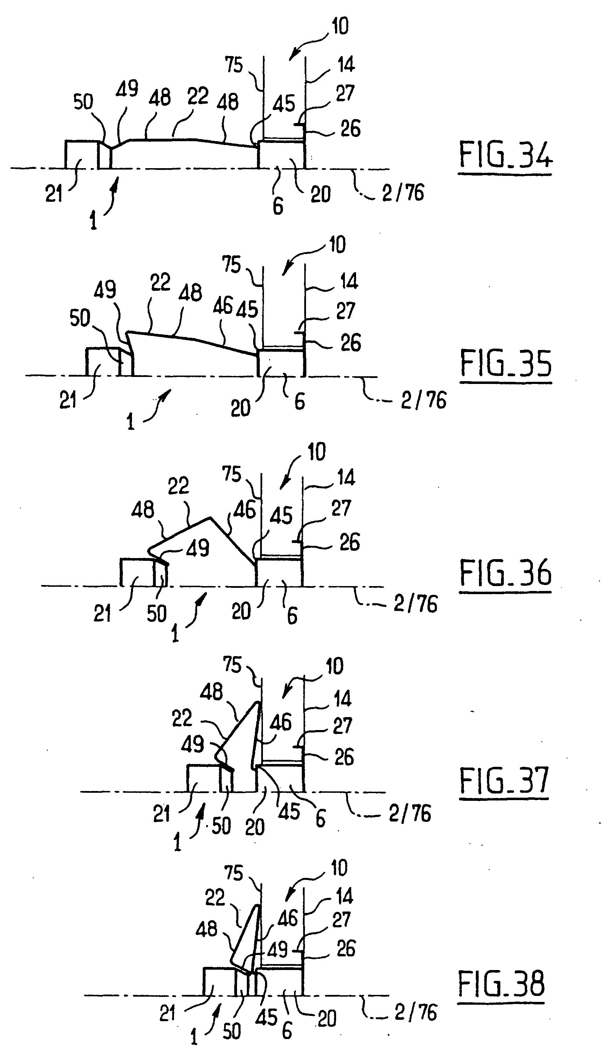

Then, either by using the placement tool conventionally used for prior art plugs, which does not necessitate preliminary screwing of the screw 15 in the plug 1 as shown in Fig. 32, or by screwing the screw 15 into the plug 1, if necessary while interposing between the head 15 and the flange 26 an object 65 to be fixed to the wall 10 as shown in Fig. 33, the nut barrel 21 is brought longitudinally toward the head barrel 20 and this is manifested by a progressive deformation of the plug 1 under conditions which will emerge on examination of Fig. 34 to 38.

As the plug is initially in the rest state, as shown in Fig. 34, the longitudinal coming together of the nut barrel 21 and the head barrel 20 is manifested in a first phase by a thrust applied by the branches 49 to an assembly formed by the branches 46 and 48 which, in a first phase, are able to pivot in the form of an entity about the connection of each branch 46 to the transition region 45 of the head barrel 20, as shown in Fig. 35, in the direction in which the mutual connection of the branches 48 and 49 moves away from the axis 2 whereas the branches 49 are increasingly inclined to the axis 2 until they are perpendicular thereto then have an inclination opposed to their original inclination, as shown in Fig. 35. Next, as shown in Fig. 36, the branches 49 are folded back over the transition region 50 of the nut barrel 21 and the continuation of the coming together of the nut barrel 21 and head barrel 20 causes folding between the branches 46 and 48, of which the mutual connection moves progressively away from the axis 2, as shown in Fig. 36.

In a variant, the folds between the various branches 46, 48, 49 of each bar 22 described with reference to Fig. 35 and 36 may be produced in a different order, but this still ends in the state of folding of the bars 22 shown in Fig. 36.

Next, the coming together of the nut barrel 21 and head barrel 20 is manifested by a progressive folding back of the branches 46 toward a face 75 of the wall 10 remote from its accessible face 14 until the connection between the branches 46 and 48 rests on this face 75 round the hole 6, as shown in Fig. 7. When the screwing of the screw 15 in the plug 1 is then continued, the resultant longitudinal coming together of the nut barrel 21 and the head barrel 20 causes the connection of the branches 49 to the transition region 50 of the nut barrel 21 to rest longitudinally against the connection of the branches 46 to the transition region 45 of the barrel 20 while reinforcing the longitudinal support of the mutual connection of the branches 46 and 48 on the face 75, as shown in Fig. 32, 33 and 38. The plug 1 is then fixed on the partition 10.

It will be noted that, in this case also, the branches 49 of the bars 22 play a favourable part by producing, between the nut barrel 21 and head barrel 20, in the state shown in Fig. 32, 33 and 38, a triangulation which reinforces the longitudinal support of the connection between the branches 46 and 48 on the face 75 of the wall 10.

Obviously, depending on the respective longitudinal dimensions L₂, L₃, L₄ of the branches 46, 48 and 49 of the plug 1 considered at rest, the relative pivoting between these branches, which have been described, may be accompanied by a certain effect of winding of some of these branches of themselves, as will be easily understood by a person skilled in the art.

In all cases, the presence of stiffeners or cross members 54 between two adjacent bars 22 forming the same pair 23 allows the deformation of the bars 22 to be controlled better and, in particular, ensures that the pairs 23 of bars 22 remain evenly distributed round the axis 2 as the bars 22 are folded in a manner which is favourable to the distribution of the forces producing the fixing between the plug 1 and the wall 7, 8, 9, 10, whatever the configuration thereof.

However, the embodiment of a plug 1 according to the invention which has just been described is merely a nonlimiting example to which numerous variations could be made, in particular with regard to the configuration of the blank 18 intended to form the plug 1, preferably in a single piece, by shaping and winding round the axis 2 as well as the resultant method of connection between the head barrel 20 and nut barrel 21 and the caps 27 and 37, or any other equivalent means capable of defining, on the one hand, the flange 26 and an equivalent of the fold 24 and, on the other hand, the tapping 43 and an equivalent of the fold 42 respectively.

Furthermore, although the fixing of a plug 1 according to the invention in a wall 7, 8, 9, 10 by screwing of a screw 15 has essentially been described, the tool conventionally used for replacement of a screw to produce the fixing of prior art plugs could also be used for placement in each case.

## Claims

1. Fixing plug for a screw (15), of the type having a longitudinal axis (2) and integrally comprising:
- two longitudinally extreme, longitudinally mutually opposed barrels (20, 21) each having a general tubular shape generated by revolution about the axis (2), namely
• a head barrel (20) having a predetermined regular external diameter (D₁) internally defining a free coaxial passage (25) for a threaded shank (16) of the screw (15) and externally carrying a longitudinally extreme transverse flange (26) and
• a nut barrel (21) having a predetermined regular external diameter (D₄), at most equal and preferably substantially equal to the regular external diameter (D₁) of the head barrel (20), and internally having coaxial tapping (43) adapted to cooperate with said threaded shank (16), and
- a plurality of mutually identical bars (22) which may be folded by plastic deformation, each have an approximate longitudinal general orientation, are distributed at regular intervals round the axis (2), are disposed between the head barrels (20) and nut barrels (21) which they mutually connect, and each comprise in succession in the longitudinal direction from the head barrel (20) to the nut barrel (21):
• a first rectilinear branch (46) having at least approximately a mean longitudinal plane (47) including the axis (2), a predetermined longitudinal dimension (L₂) and an inclination to the axis (2) so as to extend progressively away from it from a first external diameter (D₇) for connection to the head barrel (20) to a second external diameter (D₈), the first external diameter (D₇) being smaller than the regular external diameter (D₁) of the head barrel (20) and the second external diameter (D₈) being at least equal to and preferably greater than the regular external diameter (D₁) of the head barrel (20),
• a second rectilinear branch (48) having the same longitudinal mean plane (47) as the first branch (46), a predetermined longitudinal dimension (L₃) of approximately the same size as the longitudinal dimension (L₂) of the first branch (46) and an inclination to the axis (2) so as to extend progressively toward it from the second external diameter (D₈) for connection to the first branch (46) to a third external diameter (D₉) smaller than the second external diameter (D₈),
**characterised in that** the third external diameter (d₉) is greater than the regular external diameter (D₄) of the nut barrel (21) and **in that** each bar (22) also comprises a third, approximately rectilinear branch (49) which is disposed between the second branch (48) and the nut barrel (21) which it mutually connects, has a longitudinal dimension (L₄) substantially smaller than the respective longitudinal dimensions (L₂, L₃) of the first and second branches (46, 48) and is inclined
• to a longitudinal plane (47) including the axis (2) in a direction and with an obliqueness which are the same for all the third branches (49) and
• more markedly than the second branch (48) relative to the axis (2) so as to extend progressively toward it from the third external diameter (D₉) for connection to the second branch (48) to a fourth external diameter (D₁₀) for connection to the nut barrel (21), the fourth external diameter (D₁₀) being smaller than the regular external diameter (D₄) of the nut barrel (21).

2. Plug according to claim 1, **characterised in that** each third branch (49) has, with respect to a transverse plane (52), a slope (β) opposed to the slope of the tapping (43) of the nut barrel (21).

3. Plug according to any of claims 1 and 2, **characterised in that** each third branch (49) has a slope (β) of about 45° with respect to a transverse plane (52).

4. Plug according to any of claims 1 to 3, **characterised in that** the nut barrel (21) is connected to all the third branches (49) by an annular longitudinally intermediate transition region (50) generated by revolution round the axis (2) and inclined thereto so as to extend progressively toward it from the regular external diameter (D₄) of the nut barrel (21) to the fourth external diameter (D₁₀) for connection to the third branches (49).

5. Plug according to any of claims 1 to 4, **characterised in that** the head barrel (20) is connected to all the first branches (46) by an annular longitudinally intermediate transition region (45) generated by revolution round the axis (2) and inclined thereto so as to extend progressively toward it from the regular external diameter (D₁) of the head barrel (20) to the first external diameter (D₇) for connection to the first branches (46).

6. Plug according to any of claims 1 to 5, **characterised in that** there is an even number of bars (22) which are grouped in pairs (23) of circumferentially mutually adjacent bars (22) of which the second branches (48) are circumferentially mutually connected by a transverse stiffener (54) in the immediate vicinity of their connection to the first branches (46).

7. Plug according to any of claims 1 to 6, **characterised in that** the first branch (46) of each bar (22) has, facing the axis (2), in the immediate vicinity of its connection to the second branch (48), a circumferential groove (53) for locally reducing the resistance of the bar (22) to bending in the direction remote from the axis (2) between the first and second branches (46, 48).

8. Plug according to any of claims 1 to 7, **characterised in that** the first branches (46) have, in the circumferential direction, a width (I₃) which diminishes progressively from the connection to the head barrel (20) to the connection to the second branches (48).

9. Plug according to any of claims 1 to 8, **characterised in that** the second branches (48) have, in the circumferential direction, a substantially constant width (I₂) greater than that (I₃) which the first branches (46) have, in the circumferential direction, at their connection to the second branches (48).

10. Plug according to any of claims 1 to 9, **characterised in that** the third branches (49) have, in the circumferential direction, a substantially constant width (I₁) smaller than the width (I₂) which the second branches (48) have, in the circumferential direction, at their connection to the third branches (49).

11. Plug according to any of claims 1 to 10, **characterised in that** at least the head barrel (20), the nut barrel (21) and the bars (20) consist of a single piece (18) of metal in the form of a strip (19) which has been cut out and shaped, in particular by winding round the axis (2) and closure on itself in the circumferential direction, the head barrel (20) and the nut barrel (21) having a respective seam (33, 36).

12. Plug according to claim 11, **characterised in that** the seam (36) of the nut barrel (21) is helical and has a slope opposed to that of the third branches (49) with respect to a transverse plane (56).

13. Plug according to claim 12, **characterised in that** the seam (36) of the nut barrel (21) is directly adjacent to the connection between one of the third branches (59) and the nut barrel (21) downstream of said connection with reference to a circumferential direction (53) of angular offset of the connection between the third branches (49) and the nut barrel (21) relative to their connection to the second branches (48).

14. Plug according to any of claims 11 to 13, **characterised in that** the seam (33) of the head barrel (20) is rectilinear and longitudinal.

15. Plug according to any of claims 1 to 14, **characterised in that** the nut barrel (21) has a coaxial tubular internal fold (42) directly having said axial tapping (43).

16. Plug according to claim 15, **characterised in that** said fold (42) of the nut barrel (21) is continuous in the circumferential direction.

17. Plug according to claim 16, in its dependency on claim 11, **characterised in that** said piece (18) comprises a transverse annular cap (37) of nut barrel (21) forming said folds (42) of the nut barrel (21), which nut barrel cap (37) is continuous in the circumferential direction and connected to the nut barrel (21) by at least one circumferential fold (38) longitudinally remote from the connection of the first branches (49) to the nut barrel (21).

18. Plug according to claim 17, **characterised in that** there is a single circumferential fold (38) located circumferentially remote from the seam (36) of the nut barrel (21) with reference to the axis (2) and **in that** the nut barrel cap (37) is connected by mating in shape with the nut barrel (21) in the region of its seam (36).

19. Plug according to any of claims 1 to 18, **characterised in that** the head barrel (20) has a coaxial tubular internal fold (24) for coaxial guidance of said threaded shank (16).

20. Plug according to claim 19, **characterised in that** said fold (24) of the head barrel (20) is continuous in the circumferential direction.

21. Plug according to claim 20, in its dependency on claim 11, **characterised in that** said piece (18) comprises a transverse annular cap (29) of head barrel (20) forming the flange (26) and said fold (24) of the head barrel (20), which head barrel cap (29) is continuous in the circumferential direction and connected to the head barrel with at least one circumferential fold (28) longitudinally remote from the connection of the first branches (46) to the head barrel (20).

22. Plug according to claim 21, **characterised in that** there is a single circumferential fold (28) which is located diametrically remote from the seam (33) of the head barrel (20) with reference to the axis (2) and **in that** the head barrel cap (29) is connected by mating in shape with the head barrel (20) in the region of its seam (33).

23. Plug according to any of claims 1 to 22, **characterised in that** the flange (26) has claws (27) which project longitudinally round the head barrel (20).

## Patentansprüche

1. Verankerungsdübel für eine Schraube (15) des Typs, der eine Längsachse (2) hat und integral aufweist:
- zwei in Längsrichtung äußere, sich in Längsrichtung gegenüberliegende Buchsen (20, 21), von denen jede eine durch Umlauf um die Achse (2) erzeugte allgemeine Rohrform hat, nämlich
• eine Kopfbuchse (20) mit einem vorbestimmten, gleichmäßigen Außendurchmesser (D₁), die innen einen freien koaxialen Durchlass (25) für einen Gewindeschaft (16) der Schraube (15) bildet und außen einen in Längsrichtung äußeren Querflansch (26) trägt, und
• eine Mutterbuchse (21) mit vorbestimmtem gleichförmigem Außendurchmesser (D₄), der höchstens gleich und vorzugsweise im Wesentlichen gleich dem regulären Außendurchmesser (D₁) der Kopfbuchse (20) ist, und die innen einen koaxialen Gewindeabschnitt (43) zum Zusammenwirken mit dem Gewindeschaft (16) hat, und
- mehrere zueinander identische Streifen (22), die durch plastische Verformung gefaltet werden können, von denen jeder eine allgemeine Ausrichtung etwa in Längsrichtung hat, die in gleichmäßigen Abständen um die Achse (2) verteilt sind, die zwischen Kopfbuchse (20) und Mutterbuchse (21) angeordnet sind und diese miteinander verbinden und von denen jeder aufeinanderfolgend in Längsrichtung von der Kopfbuchse (20) zur Mutterbuchse (21) aufweist:
• einen ersten geradlinigen Abschnitt (46) mit einer zumindest in etwa Mittellängsebene (47), die die Achse (2) enthält, einer vorbestimmten Längsabmessung (L₂) und einer Neigung zur Achse (2), so dass er sich allmählich von einem ersten Außendurchmesser (D₇) zur Verbindung mit der Kopfbuchse (20) zu einem zweiten Außendurchmesser (D₈) von dieser weg erstreckt, wobei der erste Außendurchmesser (D₇) kleiner als der gleichmäßige Außendurchmesser (D₁) der Kopfbuchse (20) und der zweite Außendurchmesser (D₈) zumindest gleich und vorzugsweise größer als der gleichmäßige Außendurchmesser (D₁) der Kopfbuchse (20) ist,
• einen zweiten geradlinigen Abschnitt (48) mit der gleichen Mittelebene (47) wie der erste Abschnitt (46), einer vorbestimmten Längsabmessung (L₃) von in etwa der gleichen Größe wie die Längsabmessung (L₂) des ersten Abschnitts (46) und einer Neigung zur Achse (2), so dass er sich zur Verbindung mit dem ersten Abschnitt (46) allmählich vom zweiten Außendurchmesser (D₈) zu einem dritten Außendurchmesser (D₉), der kleiner als der zweite Außendurchmesser (D₈) ist, zu ihr hin erstreckt,
**dadurch gekennzeichnet, dass** der dritte Außendurchmesser (D₉) größer als der gleichmäßige Außendurchmesser (D₄) der Mutterbuchse (21) ist und dass jeder Streifen (22) auch einen dritten, in etwa geradlinigen Abschnitt (49) aufweist, der sich zwischen dem zweiten Abschnitt (48) und der Mutterbuchse (21) befindet, die er miteinander verbindet, eine Längsabmessung (L₄) wesentlich kleiner als die jeweiligen Längsabmessungen (L₂, L₃) der ersten und zweiten Abschnitte (46, 48) hat und
• zu einer die Achse (2) enthaltenden Längsebene (47) in einer Richtung und mit einer Neigung, die die gleiche für alle dritten Abschnitte (49) ist, sowie
• ausgeprägter als der zweite Abschnitt (48) bezüglich der Achse (2) geneigt ist, so dass er sich zur Verbindung mit dem zweiten Abschnitt (48) von dem dritten Außendurchmesser (D₉) allmählich zu dieser und zu einem vierten Außendurchmesser (D₁₀) zur Verbindung mit der Mutterbuchse (21) erstreckt, wobei der vierte Außendurchmesser (D₁₀) kleiner als der gleichförmige Außendurchmesser (D₄) der Mutterbuchse (21) ist.

2. Dübel nach Anspruch 1, **dadurch gekennzeichnet, dass** jeder dritte Abschnitt (49) bezüglich einer Querebene (52) eine Neigung (β) entgegen der Neigung des Gewindeabschnitts (43) der Mutterbuchse (21) hat.

3. Dübel nach Anspruch 1 oder 2, **dadurch gekennzeichnet, dass** jeder dritte Abschnitt (49) eine Neigung (β) von etwa 45° bezüglich einer Querebene (52) hat.

4. Dübel nach einem der Ansprüche 1 bis 3, **dadurch gekennzeichnet, dass** die Mutterbuchse (21) durch einen ringförmigen, sich in Längsrichtung erstrecken Zwischenübergangsbereich (50) mit allen dritten Abschnitten (49) verbunden ist, der durch Umlauf um die Achse (2) erzeugt und zu dieser geneigt ist, so dass er sich zur Verbindung mit den dritten Abschnitten (49) allmählich vom gleichmäßigen Außendurchmesser (D₄) der Mutterbuchse (21) zum vierten Außendurchmesser (D₁₀) auf sie zu erstreckt.

5. Dübel nach einem der Ansprüche 1 bis 4, **dadurch gekennzeichnet, dass** die Kopfbuchse (20) durch eine durch einen ringförmigen, sich in Längsrichtung erstreckenden Zwischenübergangsbereich (45) mit allen dritten Abschnitten (46) verbunden ist, der durch Umlauf um die Achse (2) erzeugt wird und zu dieser geneigt ist, so dass er sich zur Verbindung mit den ersten Abschnitten (46) allmählich vom gleichmäßigen Außendurchmesser (D₁) der Kopfbuchse (20) zum ersten Außendurchmesser (D₇) auf sie zu erstreckt.

6. Dübel nach einem der Ansprüche 1 bis 5, **dadurch gekennzeichnet, dass** eine gerade Anzahl von Streifen (22) vorhanden ist, die zu Paaren (23) von in Umfangsrichtung einander benachbarten Streifen (22) angeordnet sind, von denen die zweiten Abschnitte (48) in der unmittelbaren Nachbarschaft ihrer Verbindung mit den ersten Abschnitten (46) in Umfangsrichtung durch eine Querversteifung (54) verbunden sind.

7. Dübel nach einem der Ansprüche 1 bis 6, **dadurch gekennzeichnet, dass** der erste Abschnitt (46) jedes Streifens (22) in unmittelbarer Nachbarschaft seiner Verbindung mit dem zweiten Streifen (48) eine der Achse (2) zugewandte Umfangsnut (53) zur lokalen Verringerung des Biegewiderstands des Streifens (22) zwischen den ersten und zweiten Abschnitten (46, 48) gegen Biegen in Richtung weg von der Achse (2) aufweist.

8. Dübel nach einem der Ansprüche 1 bis 7, **dadurch gekennzeichnet, dass** die ersten Abschnitte (46) in Umfangsrichtung eine Breite (l₃) haben, die von der Verbindung mit der Kopfbuchse (20) zur Verbindung mit den zweiten Abschnitten (48) allmählich abnimmt.

9. Dübel nach einem der Ansprüche 1 bis 8, **dadurch gekennzeichnet, dass** die zweiten Abschnitte (48) in Umfangsrichtung eine im Wesentlichen konstante Breite (l₂) größer als diejenige der ersten Abschnitte (46) in Umfangsrichtung an der Verbindung mit den zweiten Abschnitten (48) haben.

10. Dübel nach einem der Ansprüche 1 bis 9, **dadurch gekennzeichnet, dass** die dritten Abschnitte (49) eine in Umfangsrichtung im Wesentlichen konstante Breite (l₁) kleiner als die Breite (l₂) haben, die die zweiten Abschnitte (48) an ihrer Verbindung mit den dritten Abschnitten (49) in Umfangsrichtung haben.

11. Dübel nach einem der Ansprüche 1 bis 10, **dadurch gekennzeichnet, dass** zumindest die Kopfbuchse (20), die Nutbuchse (21) und die Streifen (20) aus einem einzigen Stück (18) Metall in Form eines Streifens (19) bestehen, der ausgeschnitten und geformt wurde, insbesondere durch Wickeln um die Achse (2) und Schließen auf sich selbst in Umfangsrichtung, wobei die Kopfbuchse (20) und die Nutbuchse (21) jeweils eine Naht (33, 36) haben.

12. Dübel nach Anspruch 11, **dadurch gekennzeichnet, dass** die Naht (36) der Kopfbuchse (21) wendelförmig ist und bezüglich einer Querebene (56) eine Neigung entgegen derjenigen der dritten Abschnitte (49) hat.

13. Dübel nach Anspruch 12, **dadurch gekennzeichnet, dass** die Naht (36) der Mutterbuchse (21) sich direkt benachbart zur Verbindung zwischen einem der dritten Abschnitte (59) und der Mutterbuchse (21) und stromabwärts dieser Verbindung bezüglich einer Umfangsrichtung (53) eines Winkelversatzes der Verbindung zwischen den dritten Abschnitten (49) und der Mutterbuchse (21) bezüglich der Verbindung mit den zweiten Abschnitten (48) befindet.

14. Dübel nach einem der Ansprüche 11 bis 13, **dadurch gekennzeichnet, dass** die Naht (33) der Kopfbuchse (20) geradlinig ist und in Längsrichtung verläuft.

15. Dübel nach einem der Ansprüche 1 bis 14, **dadurch gekennzeichnet, dass** die Mutterbuchse (21) eine koaxiale, rohrförmige Innenfaltung (42) hat, die direkt den Gewindeabschnitt (43) aufweist.

16. Dübel nach Anspruch 15, **dadurch gekennzeichnet, dass** die Faltung (42) der Mutterbuchse (21) in Umfangsrichtung durchgehend ist.

17. Dübel nach Anspruch 16, wenn abhängig von Anspruch 11,
**dadurch gekennzeichnet, dass** das Stück (18) eine Quer-Ringkappe (37) der Mutterbuchse (21) hat, die die Faltung (42) der Mutterbuchse (21) bildet und die in Umfangsrichtung durchgehend und mit der Mutterbuchse (21) über mindestens eine Umfangsfalte (38), die in Längsrichtung von der Verbindung der ersten Abschnitte (49) mit der Mutterbuchse (21) entfernt ist, verbunden ist.

18. Dübel nach Anspruch 17, **dadurch gekennzeichnet, dass** eine einzige Umfangsfalte (38) bezüglich der Achse (2) in Umfangsrichtung entfernt von der Naht (36) der Mutterbuchse (21) angeordnet ist und dass die Mutterbuchsenkappe (37) durch Anpassung der Form im Bereich ihrer Naht (36) mit der Mutterbuchse (21) verbunden ist.

19. Dübel nach einem der Ansprüche 1 bis 18, **dadurch gekennzeichnet, dass** die Kopfbuchse (20) eine koaxiale, rohrförmige Innenfaltung (24) zur koaxialen Führung des Gewindeschafts (16) hat.

20. Dübel nach Anspruch 19, **dadurch gekennzeichnet, dass** die Faltung (24) der Kopfbuchse (20) in Umfangsrichtung durchgehend ist.

21. Dübel nach Anspruch 20, wenn abhängig von Anspruch 11,
**dadurch gekennzeichnet, dass** das Stück (18) eine Quer-Ringkappe (29) der Kopfbuchse (20) hat, die den Flansch (26) und die Faltung (24) der Kopfbuchse (20) bildet, wobei die Kopfbuchsenkappe (29) in Umfangsrichtung durchgehend und mit mindestens einer Umfangsfalte (28) in Längsrichtung entfernt von der Verbindung der ersten Abschnitte (46) mit der Kopfbuchse (20) verbunden ist.

22. Dübel nach Anspruch 21, **dadurch gekennzeichnet, dass** eine einzige Umfangsfalte (28) vorhanden ist, die bezogen auf die Achse (2) diametral entfernt von der Naht (33) der Kopfbuchse (20) angeordnet ist, und dass die Kopfbuchsenkappe (29) durch Anpassung der Form im Bereich der Naht (33) mit der Kopfbuchse (20) verbunden ist.

23. Dübel nach einem der Ansprüche 1 bis 22, **dadurch gekennzeichnet, dass** der Flansch (26) Klauen (27) hat, die in Längsrichtung um die Kopfbuchse (20) vorstehen.

## Revendications

1. Cheville d'ancrage pour une vis (15), du type présentant un axe longitudinal (2) et comprenant, de façon solidaire :
- deux fûts (20, 21) longitudinalement extrêmes, mutuellement opposés longitudinalement, de forme générale respective tubulaire de révolution autour de l'axe (2), à raison de
◆ un fût de tête (20) présentant un diamètre extérieur courant (D₁) déterminé, délimitant intérieurement un passage coaxial libre (25) pour une tige filetée (16) de la vis (15) et portant extérieurement une collerette transversale (26), longitudinalement extrême, et
◆ un fut d'écrou (21) présentant un diamètre extérieur courant (D₄) déterminé, au plus égal et de préférence sensiblement égal au diamètre extérieur courant (D₁) du fût de tête (20), et présentant intérieurement un taraudage coaxial (43) apte à coopérer avec ladite tige filetée (16), et
- une pluralité de barrettes (22) repliables par déformation plastique, mutuellement identiques, d'orientation générale respective approximativement longitudinale, régulièrement réparties angulairement autour de l'axe (2), disposées entre les fûts de tête (20) et d'écrou (21), qu'elles raccordent mutuellement, et comportant chacune successivement, en direction longitudinale, du fût de tête (20) au fût d'écrou (21) :
◆ une première branche rectiligne (46) présentant au moins approximativement un plan moyen longitudinal (47) incluant l'axe (2), une dimension longitudinale (L₂) déterminée et une inclinaison par rapport à l'axe (2), de façon à s'en éloigner progressivement d'un premier diamètre extérieur (D₇) de raccordement avec le fût de tête (20) à un deuxième diamètre extérieur (D₈), le premier diamètre extérieur (D₇) étant inférieur au diamètre extérieur courant (D₁) du fût de tête (20) et le deuxième diamètre extérieur (D₈) étant au moins égal et de préférence supérieur au diamètre extérieur courant (D₁) du fût de tête (20),
◆ une deuxième branche rectiligne (48) présentant le même plan moyen longitudinal (47) que la première branche (46), une dimension longitudinale déterminée (L₃), du même ordre de grandeur que la dimension longitudinale (L₂) de la première branche (46), et une inclinaison par rapport à l'axe (2), de façon à s'en rapprocher progressivement du deuxième diamètre extérieur (D₈) de raccordement avec la première branche (46) à un troisième diamètre extérieur (D₉) inférieur au deuxième diamètre extérieur (D₈),
**caractérisée en ce que** le troisième diamètre extérieur (D₉) est supérieur au diamètre extérieur courant (D₄) du fût d'écrou (21) et **en ce que** chaque barrette (22) comporte en outre une troisième branche (49), approximativement rectiligne, disposée entre la deuxième branche (48) et le fût d'écrou (21), qu'elle raccorde mutuellement, présentant une dimension longitudinale (L₄) sensiblement inférieure aux dimensions longitudinales respectives (L₂, L₃) des première et deuxième branches (46, 48), et inclinée à la fois
◆ par rapport à un plan longitudinal (47) incluant l'axe (2), dans un sens et avec une obliquité qui sont les mêmes pour l'ensemble des troisièmes branches (49), et
◆ plus fortement que la deuxième branche (48), par rapport à l'axe (2) de façon à s'en rapprocher progressivement du troisième diamètre extérieur (D₉) de raccordement avec la deuxième branche (48) à un quatrième diamètre extérieur (D₁₀) de raccordement avec le fût d'écrou (21), le quatrième diamètre extérieur (D₁₀) étant inférieur au diamètre extérieur courant (D₄) du fût d'écrou (21).

2. Cheville selon la revendication 1, **caractérisée en ce que** chaque troisième branche (49) présente par rapport à un plan transversal (52) une pente (6) opposée à la pente du taraudage (43) du fût d'écrou (21).

3. Cheville selon l'une quelconque des revendications 1 et 2, **caractérisée en ce que** chaque troisième branche (49) présente par rapport à un plan transversal (52) une pente (β) de l'ordre de 45°.

4. Cheville selon l'une quelconque des revendications 1 à 3, **caractérisée en ce que** le fût d'écrou (21) est raccordé à l'ensemble des troisièmes branches (49) par une zone longitudinalement intermédiaire de transition (50), annulaire de révolution autour de l'axe (2) et inclinée par rapport à lui de façon à s'en rapprocher progressivement du diamètre extérieur courant (D₄) du fût d'écrou (21) au quatrième diamètre extérieur (D₁₀) de raccordement avec les troisièmes branches (49).

5. Cheville selon l'une quelconque des revendications 1 à 4, **caractérisée en ce que** le fût de tête (20) est raccordé à l'ensemble des premières branches (46) par une zone longitudinalement intermédiaire de transition (45), annulaire de révolution autour de l'axe (2) et inclinée par rapport à lui de façon à s'en rapprocher progressivement du diamètre extérieur courant (Di) du fût de tête (20) au premier diamètre extérieur (D₇) de raccordement avec les premières branches (46).

6. Cheville selon l'une quelconque des revendications 1 à 5, **caractérisée en ce que** les barrettes (22) sont en nombre pair et sont groupées par paires (23) de barrettes (22) mutuellement voisines circonférentiellement, dont les deuxièmes branches (48) sont mutuellement raccordées circonférentiellement par un raidisseur transversal (54), à proximité immédiate de leur raccordement avec les premières branches (46).

7. Cheville selon l'une quelconque des revendications 1 à 6, **caractérisée en ce que** la première branche (46) de chaque barrette (22) présente en regard de l'axe (2), à proximité immédiate de son raccordement / avec la deuxième branche (48), une gorge circonférentielle (53) de réduction localisée de la résistance de la barrette (22) à la flexion dans le sens d'un éloignement par rapport à l'axe (2) entre les première et deuxième branches (46, 48).

8. Cheville selon l'une quelconque des revendications 1 à 7, **caractérisée en ce que** les premières branches (46) présentent, en direction circonférentielle, une largeur (l₃) qui diminue progressivement du raccordement au fût de tête (20) au raccordement avec les deuxièmes branches (48).

9. Cheville selon l'une quelconque des revendications 1 à 8, **caractérisée en ce que** les deuxièmes branches (48) présentent, en direction circonférentielle, une largeur (I₂) sensiblement constante, supérieure à celle (I₃) que les premières branches (46) présentent, en direction circonférentielle, à leur raccordement avec les deuxièmes branches (48).

10. Cheville selon l'une quelconque des revendications 1 à 9, **caractérisée en ce que** les troisièmes branches (49) présentent, en direction circonférentielle, une largeur (I₁) sensiblement constante, inférieure à la largeur (I₂) que les deuxièmes branches (48) présentent, en direction circonférentielle, à leur raccordement avec les troisièmes branches (49).

11. Cheville selon l'une quelconque des revendications 1 à 10, **caractérisée en ce qu'**au moins le fût de tête (20), le fût d'écrou (21) et les barrettes (22) consistent en une seule pièce (18) de métal en forme de bande (19) découpée et façonnée, en particulier par enroulement autour de l'axe (2) et fermeture sur elle-même en direction circonférentielle, le fût de tête (20) et le fût d'écrou (21) présentant un joint de fermeture respectif (33, 36).

12. Cheville selon la revendication 11, **caractérisée en ce que** le joint de fermeture (36) du fût d'écrou (21) est hélicoïdal et présente par rapport à un plan transversal (56) une pente opposée à celle des troisièmes branches (49).

13. Cheville selon la revendication 12, **caractérisée en ce que** le joint de fermeture (36) du fût d'écrou (21) est directement adjacent au raccordement de l'une des troisièmes branches (49) avec le fût d'écrou (21), en aval dudit raccordement en référence à un sens circonférentiel (53) de décalage angulaire du raccordement des troisièmes branches (49) avec le fut d'écrou (21) par rapport à leur raccordement avec les deuxièmes branches (48).

14. Cheville selon 'une quelconque des revendications 11 à 13, **caractérisée en ce que** le joint de fermeture (33) du fût de tête (20) est rectiligne et longitudinal.

15. Cheville selon l'une quelconque des revendications 1 à 14, **caractérisée en ce que** le fût d'écrou (21) présente un repli intérieur tubulaire (42), coaxial, présentant directement ledit taraudage axial (43).

16. Cheville selon la revendication 15, **caractérisée en ce que** ledit repli (42) du fût d'écrou (21) est continu en direction circonférentielle.

17. Cheville selon la revendication 16 dans sa relation de dépendance vis-à-vis de la revendication 11, **caractérisée en ce que** ladite pièce (18) comporte un chapeau annulaire transversal (37) de fût d'écrou (21), formant ledit repli (42) du fût d'écrou (21), lequel chapeau de fût d'écrou (37) est continu en direction circonférentielle et raccordé au fût d'écrou (21) par au moins un pli circonférentiel (38), longitudinalement à l'opposé du raccordement des troisièmes branches (49) avec le fût d'écrou (21).

18. Cheville selon la revendication 17, **caractérisée en ce que** ledit pli circonférentiel (38) est unique, localisé circonférentiellement à l'opposé du joint de fermeture (36) du fût d'écrou (21) en référence à l'axe (2), et **en ce que** le chapeau de fût d'écrou (37) est raccordé par complémentarité de forme au fût d'écrou (21) au niveau du joint de fermeture (36) de celui-ci.

19. Cheville selon l'une quelconque des revendications1 à 18, **caractérisée en ce que** le fût de tête (20) présente un repli intérieur tubulaire (24), coaxial, de guidage coaxial pour ladite tige filetée (16).

20. Cheville selon la revendication 19, **caractérisée en ce que** ledit repli (24) du fût de tête (20) est continu en direction circonférentielle.

21. Cheville selon la revendication 20 dans sa relation de dépendance vis-à-vis de la revendication 11, **caractérisée en ce que** ladite pièce (18) comporte un chapeau annulaire transversal (29) de fût de tête (20), formant la collerette (26) et ledit repli (24) du fût de tête (20), lequel chapeau de fût de tête (29) est continu en direction circonférentielle et raccordé au fût de tête par au moins un pli circonférentiel (28), longitudinalement à l'opposé du raccordement des premières branches (46) avec le fût de tête (20).

22. Cheville selon la revendication 21, **caractérisée en ce que** ledit pli circonférentiel (28) est unique, localisé diamétralement à l'opposé du joint de fermeture (33) du fût de tête (20) en référence à l'axe (2), et **en ce que** le chapeau de fût de tête (29) est raccordé par complémentarité de forme au fût de tête (20) au niveau du joint de fermeture (33) de celui-ci.

23. Cheville selon l'une quelconque des revendications 1 à 22, **caractérisée en ce que** la collerette (26) présente des griffes (27) en saillie longitudinale autour du fût de tête (20).
